# EUROPEAN PATENT SPECIFICATION

(11) **EP 3 883 281 B1**
(45) Date of publication and mention of the grant of the patent: **11.10.2023**
(21) Application number: 19900243.7
(22) Date of filing: 17.12.2019
(51) Int. Cl.: H04W 16/26, H04W 72/27, H04W 88/08

(54) **METHOD FOR ALLOCATING RESOURCES AND COMMUNICATION APPARATUS**
VERFAHREN ZUR RESSOURCENZUTEILUNG UND KOMMUNIKATIONSVORRICHTUNG
PROCÉDÉ D'ATTRIBUTION DE RESSOURCES ET APPAREIL DE COMMUNICATION

(30) Priority: 17.12.2018 CN 201811540438
(43) Date of publication of application: 22.09.2021
(73) Proprietor: Huawei Technologies Co., Ltd., Longgang Shenzhen, Guangdong 518129 (CN)
(72) Inventor: LUO, Haiyan, Shenzhen, Guangdong 518129 (CN); ZENG, Qinghai, Shenzhen, Guangdong 518129 (CN); DAI, Mingzeng, Shenzhen, Guangdong 518129 (CN)
(74) Representative: Grünecker Patent- und Rechtsanwälte PartG mbB
(86) International application number: PCT/CN2019/125873
(87) International publication number: WO 2020/125608

(56) References cited:
- EP-A1- 3 226 583
- EP-A2- 2 485 411
- WO-A1-2008/043242
- WO-A1-2017/028462
- WO-A1-2017/115127
- WO-A1-2018/058636
- CN-A- 101 188 816
- US-A1- 2007 070 929
- US-A1- 2018 242 393
- CATR: "Discussions on L3-based UE-to-Network Relays communication procedure", 3GPP DRAFT; R2-153488, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Beijing, China; 20150824 - 20150828 14 August 2015 (2015-08-14), XP050993019, Retrieved from the Internet: URL:http://www.3gpp.org/ftp/tsg_ran/WG2_RL 2/TSGR2_91/Docs/ [retrieved on 2015-08-14]
- MEDIATEK INC.: "On Sidelink Resource Allocation Mechanism", 3GPP TSG RAN WG1 Meeting #95, R1-1812367,, 16 November 2018 (2018-11-16), XP051554276, DOI: 20200220171049X
- FRAUNHOFER HHI et al.: "Designs for NR V2X Mode 2 Resource Allocation", 3GPP TSG RAN WG1 Meeting #95, R1-1812399,, 16 November 2018 (2018-11-16), XP051478599, DOI: 20200221083757X
- AT&T: "Resource allocation mechanism", 3GPP TSG RAN WG1 Meeting #95, R1-1812872,, 16 November 2018 (2018-11-16), XP051479119, DOI: 20200221084637A
- HUAWEI et al.: "Sidelink Resource Allocation Mode 2", 3GPP TSG RAN WG1 Meeting #95, R1-1812209,, 16 November 2018 (2018-11-16), XP051478365, DOI: 20200221085135A

## Description

### TECHNICAL FIELD

This application relates to the communications field, and more specifically, to a resource allocation method and a communications apparatus.

### BACKGROUND

A concept of a relay node is introduced in the 3rd generation partnership project (the 3rd generation partnership project, 3GPP) R10. The relay node supports L3 relay. The L3 relay means that a relay device has a complete protocol stack (for example, a radio resource control (wireless resource control, RRC)/packet data convergence protocol (packet data convergence protocol, PDCP)/radio link control (radio link control, RLC)/media access control (media access control, MAC)/physical layer (physical layer, PHY) protocol). That is, for a terminal, the relay device is equivalent to a base station.

In a subject of a wearable device in 3GPP R15, terminal-to-network relay (UE-to-Network relay) is further introduced. The relay node supports L2 relay. The L2 relay means that a relay device does not have a complete protocol stack. For UE, the relay device has a relay function. For example, regardless of a user plane or a control plane, the relay device has only an RLC/MAC/PHY protocol stack for the UE, and has only an adaptation (adaptation) layer/RLC/MAC/PHY protocol stack for a base station. The adaptation layer mainly includes an identifier of the UE on a PC5 interface, and a data radio bearer (data radio bearer, DRB) identifier of the UE or a corresponding logical channel identifier (logical channel identification, LCID) of the PC5 interface between the UE and the relay node.

Currently, in an R16 NR V2X subject, an introduced node has both an L2 relay function and an L3 relay function, and the node has a capability of managing a plurality of terminal devices in a local area. For example, the node is referred to as a local coordinator (local coordinator, LC). If such a local coordinator is deployed in a communications system, how to allocate communications resources to ensure resource utilization urgently needs to be resolved.

EP 3 226 583 A1 discloses a method for realizing device-to-device communication relay selection, a network control node and user equipment. The method includes: a network control node receiving relay-related information sent by user equipment and determining a relay node; and the network control node sending device-to-device communication relay configuration information to the determined relay node. WO 2017/115127 A1 provides a method and apparatus for transmitting information in a wireless communication system and a method and apparatus for facilitating information transmission in a wireless communication system.

### SUMMARY

The invention is captured in the attached set of claims.

### BRIEF DESCRIPTION OF DRAWINGS

FIG. 1 is a schematic diagram of a communications system according to this application;
FIG. 2 is a schematic diagram of an application scenario of a communications system according to this application;
FIG. 3 is a schematic diagram of a protocol stack of a relay node that supports L3 relay in a conventional solution;
FIG. 4 is a schematic diagram of a user plane protocol stack of a communications system including a relay node that supports L2 relay in a conventional solution;
FIG. 5 is a schematic diagram of a control plane protocol stack of a communications system including a relay node that supports L2 relay in a conventional solution;
FIG. 6 is a schematic flowchart of a resource allocation method according to an embodiment of this application;
FIG. 7 is a schematic flowchart of a resource allocation method according to another embodiment of this application;
FIG. 8 is a schematic diagram of a control plane protocol stack for communication between a first node, a radio access network device, and a terminal device;
FIG. 9 is a schematic diagram of a user plane protocol stack for communication between a first node, a radio access network device, and a terminal device;
FIG. 10 is a schematic diagram of a global user plane protocol stack for communication between a first node, a radio access network device, and a core network device;
FIG. 11 is a schematic block diagram of a communications apparatus for resource allocation according to an embodiment of this application;
FIG. 12 is a schematic structural diagram of a communications apparatus for resource allocation according to an embodiment of this application;
FIG. 13 is a schematic block diagram of a communications apparatus for resource allocation according to an embodiment of this application;
FIG. 14 is a schematic structural diagram of a communications apparatus for resource allocation according to an embodiment of this application; and
FIG. 15 is a schematic structural diagram of a radio access network device according to an embodiment of this application.

### DESCRIPTION OF EMBODIMENTS

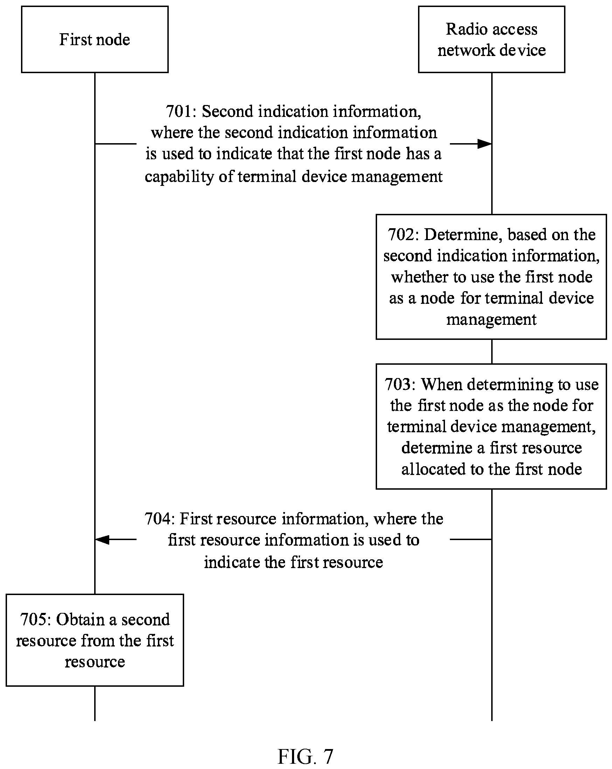

The invention made is disclosed in figure 7. Embodiments described with reference to other figures are not-claimed embodiments.

The following describes technical solutions of this application with reference to the accompanying drawings.

The technical solutions in the embodiments of this application may be used in various communications systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS) system, a worldwide interoperability for microwave access (worldwide interoperability for microwave access, WiMAX) communications system, a future 5th generation (5th generation, 5G) system, or new radio (new radio, NR) system.

As an example instead of a limitation, the terminal device in the embodiments of this application may also be referred to as user equipment (user equipment, UE), an access terminal, a subscriber unit, a subscriber station, a mobile station, a mobile console, a remote station, a remote terminal, a mobile device, a user terminal, a terminal, a wireless communications device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a future 5G network, a terminal device in a future evolved public land mobile communications network (public land mobile network, PLMN), or the like. This is not limited in the embodiments of this application, and is not distinguished in the following embodiments.

By way of example and not limitation, in the embodiments of this application, the terminal device may alternatively be a wearable device. The wearable device may also be referred to as a wearable intelligent device, and is a general term of wearable devices, such as glasses, gloves, watches, clothes, and shoes, that are developed by applying wearable technologies in intelligent designs of daily wear. The wearable device is a portable device that can be directly worn on a body or integrated into clothes or an accessory of a user. The wearable device is not only a hardware device, but is used to implement powerful functions through software support, data exchange, and cloud interaction. Generalized wearable intelligent devices include full-featured and large-size devices that can implement complete or partial functions without depending on smartphones, for example, smart watches or smart glasses, and devices that focus on only one type of application function and need to work with another device such as a smartphone, for example, various smart bands or smart accessories for monitoring physical signs.

In addition, the terminal device in the embodiments of this application may alternatively be a terminal device in an internet of things (internet of things, IoT) system. IoT is an important part of future development of information technologies. A main technical feature of IoT is connecting a thing to a network by using a communications technology, to implement an intelligent network for interconnection between a person and a machine or between one thing and another. Alternatively, the terminal device may be a terminal device in an industrial internet of things (industry internet of things, IIoT) system, for example, each signal receiving point or sensor (sensor) in a mechanical arm. IIoT is an important part of the industrial internet of future development. Its main technical feature is to change some wired connections of the industrial internet to wireless connections to improve flexibility of the industrial internet. The industrial internet mainly includes device/shop-level control and factory-level control. For example, the device/shop-level controller controls actions of each point on a mechanical arm. The factory-level controller controls one or more device/shop-level controllers.

In the embodiments of this application, an IoT technology may implement massive connections, deep coverage, and terminal device power saving by using, for example, a narrowband (narrow band) NB technology. For example, NB includes only one resource block (resource block, RB). In other words, a bandwidth of NB is only 180 KB. To implement massive connections, terminal devices need to perform discrete access. According to the communication method in the embodiments of this application, a congestion problem existing when massive terminal devices access a network through an NB by using the IoT technology can be effectively resolved.

In addition, in this application, the terminal device may alternatively include a sensor such as an intelligent printer, a train detector, or a gas station, and main functions of the terminal device include: collecting data (for some terminal devices), receiving control information and downlink data from a radio access network device, sending an electromagnetic wave, and sending uplink data to the radio access network device.

The radio access network device in the embodiments of this application may be a device configured to communicate with the terminal device. The radio access network device may be a global system for mobile communications (global system for mobile communications, GSM) or a base transceiver station (base transceiver station, BTS) in code division multiple access (code division multiple access, CDMA), or may be a NodeB (NodeB, NB) in a wideband code division multiple access (wideband code division multiple access, WCDMA) system, or may be an evolved NodeB (evolved NodeB, eNB or eNodeB) in an LTE system or a gNB (gNB) in a new radio technology, or may be a radio controller in a cloud radio access network (cloud radio access network, CRAN) scenario. Alternatively, the radio access network device may be a relay station, an access point (access point, AP), a Wi-Fi signal source device, a vehicle-mounted device, a wearable device, a radio access network device in a future 5G network, a radio access network device in a future evolved PLMN network, or the like, or may be an access point in a WLAN, or may be a gNB in a new radio (new radio, NR) system. This is not limited in this embodiment of this application.

In addition, in the embodiments of this application, the radio access network device serves a cell. The terminal device communicates with the radio access network device on a transmission resource (for example, a frequency domain resource, namely, a spectrum resource) used in the cell. The cell may be a cell corresponding to the radio access network device (for example, a base station). The cell may belong to a macro base station, or a base station corresponding to a small cell (small cell). The small cell herein may include a metro cell (metro cell), a micro cell (micro cell), a pico cell (pico cell), a femto cell (femto cell), or the like. These small cells have features of small coverage and low transmit power, and are suitable for providing a high-rate data transmission service.

In addition, a plurality of cells may simultaneously work in a same frequency band on a carrier in the LTE system or the 5G system. In some special scenarios, a concept of the carrier may be considered equivalent to that of the cell. For example, in a carrier aggregation (carrier aggregation, CA) scenario, both a carrier index of a secondary component carrier and a cell identifier (cell identification, Cell ID) of a secondary cell that works on the secondary component carrier are carried when the secondary component carrier is configured for UE. In this case, the concept of the carrier may be considered equivalent to that of the cell. For example, that the UE accesses a carrier is equivalent to that the UE accesses a cell.

A core network device may be connected to a plurality of radio access network devices, may be configured to control the radio access network devices, and may distribute, to the access network devices, data received from a network side (for example, the internet).

In addition, in this application, the radio access network device may include a base station (eNB/NodeB/gNB), for example, a macro base station, a micro base station, an indoor hotspot, or a relay node, and has functions of the following: sending a radio wave to the terminal device, to implement downlink data transmission and control uplink transmission by sending scheduling information; and receiving a radio wave sent by the terminal device, to receive uplink data transmission.

The foregoing listed functions and specific implementations of the terminal device, the access network device, and the core network device are merely examples for description, and this application is not limited thereto.

A first node in this embodiment of this application may be a relay base station, for example, a micro base station. The first node may alternatively be a terminal device that provides a relay function. The first node may alternatively be a network entity such as a relay transceiver node, customer terminal equipment (customer premise equipment, CPE), a relay transceiver, a relay agent, a relay node (Relaying Node, RN), a transmission reception point (transmission and Reception Point, TRP), or a relay transmission reception point (relaying TRP, rTRP).

In the embodiments of this application, the terminal device or the radio access network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (which is also referred to as a main memory). An operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant communications software. In addition, a specific structure of an execution body of a method provided in the embodiments of this application is not specifically limited in the embodiments of this application provided that a program that records code for the method provided in the embodiments of this application can be run to perform communication according to the method provided in the embodiments of this application. For example, the execution body of the method provided in the embodiments of this application may be the terminal device, the radio access network device, or a function module that is in the terminal device or the radio access network device and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to a magnetic storage component (for example, a hard disk, a floppy disk, or a magnetic tape), an optical disc (for example, a compact disc (compact disc, CD), a digital versatile disc (digital versatile disc, DVD), or the like), a smart card, and a flash memory component (for example, an erasable programmable read-only memory (erasable programmable read-only memory, EPROM), a card, a stick, or a key drive).

In addition, various storage media described in this specification may represent one or more devices and/or other machine-readable media that are configured to store information. The term "machine-readable medium" may include but is not limited to a radio channel, and various other media that can store, include, and/or carry instructions and/or data.

It should be noted that in the embodiments of this application, a plurality of applications may be run at the application layer. In this case, an application for performing the communication method in the embodiments of this application and an application configured to control a receive end device to implement an action corresponding to received data may be different applications.

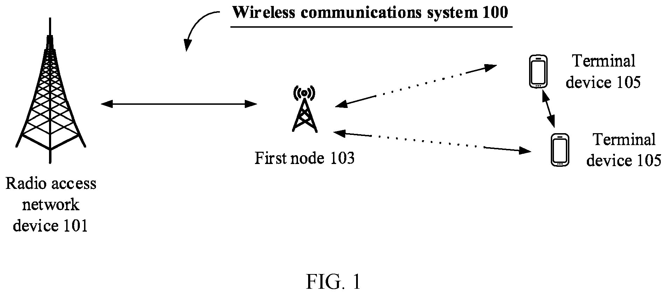

FIG. 1 is a schematic diagram of a communications system according to this application. In a wireless communications system 100, a first node 103 between a radio access network device 101 and at least one terminal device 105 may be configured to manage the at least one terminal device 105. The first node is responsible for managing the first node and the at least one terminal device, and communication between terminal devices.

It should be noted that the wireless communications system 100 shown in FIG. 1 is only intended to describe the technical solutions of this application more clearly, but is not intended to limit this application. A person of ordinary skill in the art may know that as a network architecture evolves and new service scenarios emerge, the technical solutions provided in this application are also applicable to a similar technical problem.

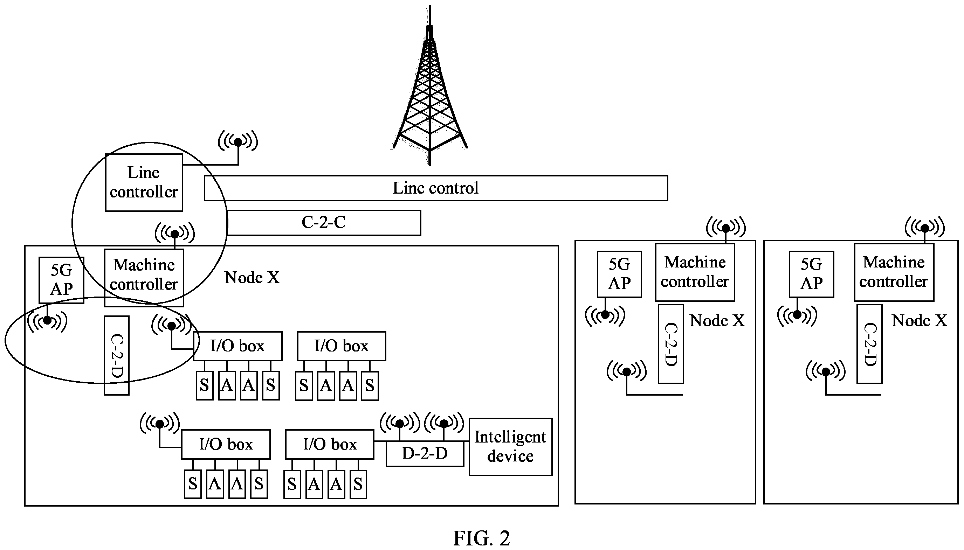

FIG. 2 shows an application scenario in a communications system according to this application. As shown in FIG. 2, the communications system is an industrial internet system, and the industrial internet system mainly includes transmission between four types of devices: communication (C2C-1) between a line controller (line controller) and a machine controller (machine controller), communication (C2C-2) between machine controllers, communication (C2D) between a machine controller and a device, and communication (D2D) between devices. The line controller and the machine controller may be respectively understood as a factory controller and a device controller.

It should be understood that, in the scenario shown in FIG. 2, the line controller may be a base station, and the machine controller may also be a programmable logic controller (programmable logic controller, PLC) or a bus controller (line controller). A device in C2D or D2D may be a node or a sensor (sensor) on a mechanical arm. This is not limited in this application.

In other words, C2D communication may be communication between the programmable logic controller PLC and each node on the mechanical arm, C2C-1 communication may be communication between the base station and the PLC, and C2C-2 communication may be communication between PLCs. The line controller manages and coordinates the machine controller in a C2C-1 communication manner, the machine controller further coordinates mutual interference in a C2C-2 communication manner, and the machine controller manages C2D+D2D communication in a local range.

If the machine controller is a local coordinator LC and the linear controller is a base station, communication (C2D) between the local coordinator LC and a device, communication (C2C-1) between the base station and the local coordinator LC, communication (C2C-2) between local coordinator LCs, and communication (D2D) between devices may be performed in the foregoing industrial internet system.

It should be noted that the C2C-1 mainly uses LTE/NR air interface communication, and the three communication manners C2C-2, C2D, and D2D mainly use sidelink (sidelink) communication.

Optionally, an embodiment of this application further provides another application scenario vehicle to everything (vehicle to X, V2X) of a communications system. The V2X includes four different use cases: vehicle to vehicle (vehicle to vehicle, V2V) communication/vehicle to roadside infrastructure (vehicle to infrastructure, V2I) communication/vehicle to network (vehicle to network, V2N) communication/vehicle to pedestrian (vehicle to pedestrian, V2P) communication. In a V2X scenario, a role of a device may change between a local coordinator LC and a normal terminal device due to movement.

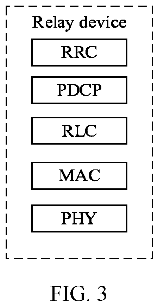

FIG. 3 is a schematic diagram of a protocol stack of a relay node that supports L3 relay in a conventional solution. As shown in FIG. 3, the relay node that supports the L3 relay has a complete protocol stack, and is equivalent to a base station for a terminal device. The relay node has a radio resource control (radio resource control, RRC) layer, a packet data convergence protocol (packet data convergence protocol, PDCP) layer, a radio link control (radio link control, RLC) layer, a media access control (media access control, MAC) layer, and a physical (Physical, PHY) layer for the terminal device. The RRC layer is used to control an RRC connection. The PDCP layer is used for internet protocol (internet protocol, IP) header compression and decompression, encryption and decryption, and integrity verification. The RLC layer is used to provide segmentation and retransmission services, including packet segmentation, packet sequencing, duplicate packet detection, packet reassembly, and the like, for a user and control data. The MAC layer is mainly responsible for controlling and connecting a physical medium of the physical layer. The PHY layer is used to create, maintain, and remove a physical link required for data transmission, and provide mechanical, electronic, functional, and normative features.

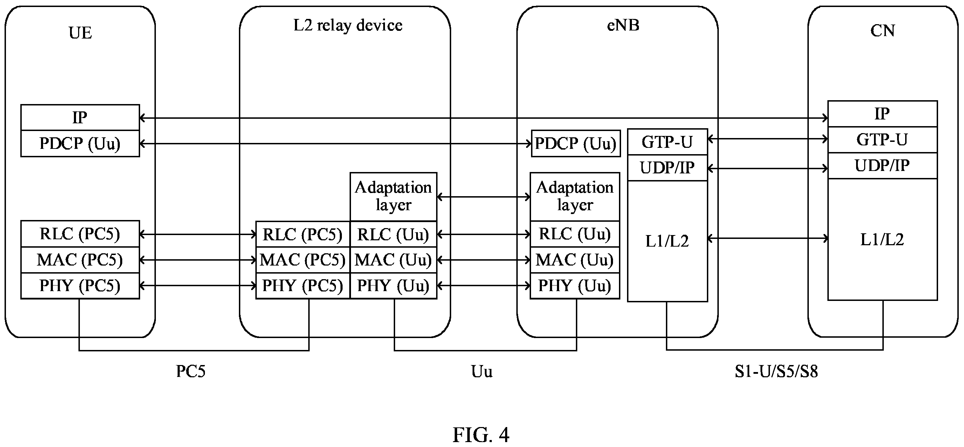

FIG. 4 is a schematic diagram of a user plane protocol stack of a communications system including a relay node that supports L2 relay in a conventional solution. The relay node that supports the L2 relay does not have a complete protocol stack, and is a relay device for a terminal device. To be specific, for the terminal device, a user plane has only an RLC/a MAC/a PHY protocol stack, and for a radio access network device, a user plane has only an adaptation (adaptation) layer/an RLC/a MAC/a PHY protocol stack. The adaptation layer mainly includes an identifier of the terminal device on a PC5 interface, and a DRB identifier of the terminal device or a corresponding LCID of a PC5 interface between the terminal device and the relay device. In addition, in the communications system shown in FIG. 4, an IP layer of the terminal device and an IP layer of a core network (core network, CN) device are transparently transmitted by using a L2 relay device and a base station, and a PDCP layer of the terminal device and a PDCP layer of the base station are transparently transmitted by using the L2 relay device. An IP protocol layer of the core network device further includes a general packet radio service tunneling protocol for the user plane (GPRS tunneling protocol for the user plane, GTP-U) layer. The GTP-U layer communicates with a GTP-U layer of the base station. A UDP/an IP layer below the GTP-U layer further communicates with a user datagram protocol (user datagram protocol, UDP)/an IP layer of the base station. An L1/L2 layer of the core network device communicates with an L1/L2 layer of the base station. In addition, the terminal device communicates with the L2 relay device by using the PC5 interface. The L2 relay device communicates with the base station by using a Uu interface, the base station communicates with the CN by using an S 1-U or S5 interface, and the CN communicates with the terminal device by using S8.

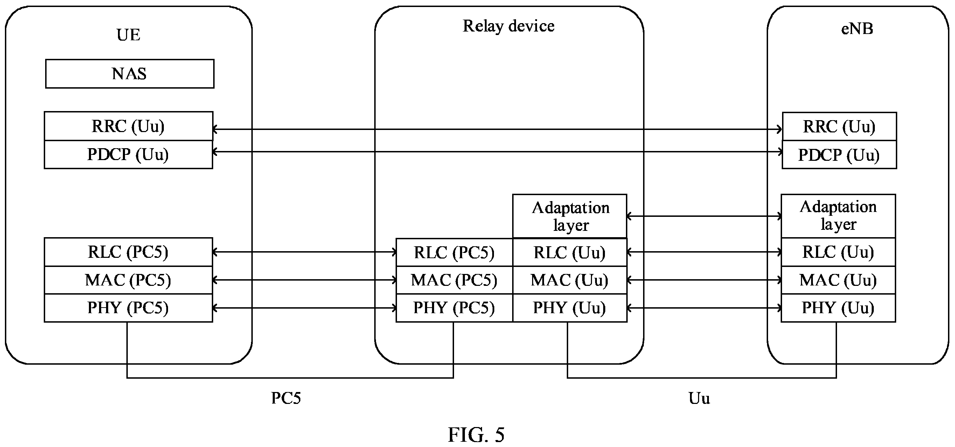

FIG. 5 is a schematic diagram of a control plane protocol stack of a communications system including a relay node that supports L2 relay in a conventional solution. The relay node that supports the L2 relay does not have a complete protocol stack, and is a relay device for a terminal device. To be specific, for the terminal device, a control plane has only an RLC/a MAC/a PHY protocol stack, and for a radio access network device, a control plane has only an adaptation (adaptation) layer/an RLC/a MAC/a PHY protocol stack. In addition, in the communications system shown in FIG. 5, an RRC layer and a PDCP layer of the terminal device and an RRC layer and a PDCP layer of the radio access network device are transparently transmitted by using the relay device. In addition, a control plane of the terminal device further includes a non-access stratum (non access stratum, NAS) layer. The NAS layer of the terminal device and a NAS layer of a core network are transparently transmitted by using the relay device and the radio access network device.

In the foregoing plurality of scenarios, after a local coordinator LC is introduced, how to allocate communications resources to ensure resource utilization urgently needs to be resolved.

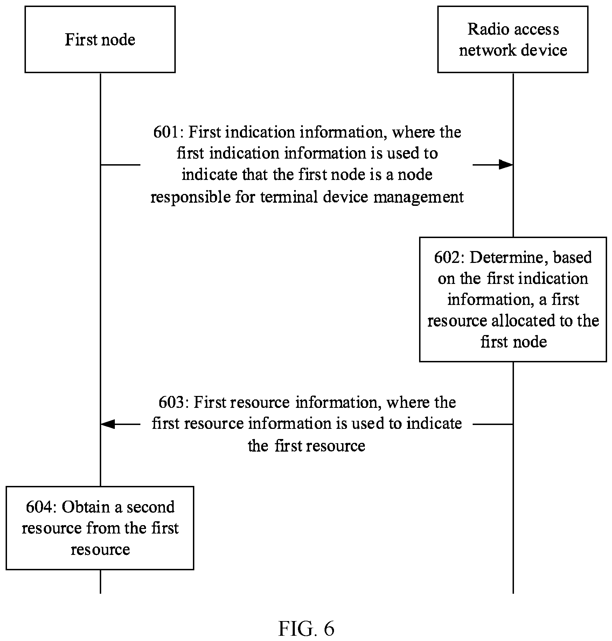

FIG. 6 is a schematic flowchart of a resource allocation method according to an embodiment of this application.

601: A first node sends first indication information to a radio access network device, where the first indication information is used to indicate that the first node is a node responsible for terminal device management. Correspondingly, the radio access network device receives the first indication information.

Specifically, when determining that the first node is a local coordinator LC, the first node may actively send the first indication information to the radio access network device. The radio access network device may learn, based on the received first indication information, that the first node is the local coordinator LC.

It should be noted that the local coordinator may be understood as being responsible for transmission between terminal devices in a local area. A resource used for the transmission between the terminal devices in the local area may be flexibly allocated from resources allocated by the radio access network device to the local coordinator, or may be specified by the radio access network device (for example, a base station) in resources allocated to the local coordinator. Alternatively, a radio resource used by the local coordinator may be obtained by the local coordinator through channel sensing. The terminal device in the local area may be visible to the base station. For example, an RRC connection is established between the terminal and the base station. However, even if the terminal device in the local area is visible to the base station, original scheduling or allocation of a transmission resource of the terminal device by the base station changes to scheduling or allocation by the local coordinator. The terminal device in the local area may alternatively be invisible to the base station. For example, the terminal is located out of cell coverage (out of cell coverage, OCC), or the terminal does not have a subscriber identity module (subscriber identity module, SIM) card. The local coordinator may also have an RRC connection to the base station, or may be invisible to the base station. A sidelink (sidelink) technology, for example, an LTE sidelink or a new radio NR sidelink, may be used for the transmission between the terminal devices. Other short-distance transmission technologies such as Bluetooth, ZigBee, and wireless fidelity (wireless fidelity, Wi-Fi) may alternatively be used. An LTE or NR air interface technology is alternatively used. When the sidelink technology is used for the transmission between the terminal devices, the local coordinator may be responsible for configuring a transmission resource pool (Tx Pool) and/or a reception resource pool (Rx Pool) for a terminal device in a UE selection mode or a scheduling mode.

In the UE selection mode, the local coordinator broadcasts one or more resource pools on one or more carriers, or configures one or more resource pools on one or more carriers by using a control plane message. After performing channel sensing, the terminal device determines channel busy ratios (channel busy ratio, CBR) of the resource pools, and then selects a resource pool for transmission. The scheduling mode may be classified into a dynamic resource allocation mode and a semi-persistent (semi-persistent scheduling, SPS) mode. In the dynamic resource allocation mode, the terminal device requests, from the local coordinator LC, a sidelink to send a resource (for example, send a buffer status report (buffer status report, BSR)), and the local coordinator LC allocates a specified resource pool to the terminal based on the request. In the SPS mode, the terminal device sends a traffic type (traffic pattern) to the local coordinator LC, and the local coordinator LC configures an SPS parameter for the terminal. The radio access network device may be an LTE base station eNB, a new radio base station gNB, or the like. For example, in the industrial internet shown in FIG. 2, the local coordinator LC may be deployed between the base station and the terminal device, and is responsible for, for example, data transmission in a workshop. For example, a local control node distributes control data of a machine controller PLC in the industrial internet to terminal devices managed by the local control node, or sends data of the terminal devices to the PLC. The local coordinator LC and the PLC may be separately deployed, or may be deployed together, for example, one or more local coordinators LCs are included in a management scope of the PLC. Alternatively, the local coordinator LC is physically deployed together with the PLC.

It should be understood that the resource pool may be a frequency domain resource including one or more radio resource blocks (resource block, RB), or a time-frequency domain resource including one or more RBs in a specific subframe or subframe set. There may be one or more resource pools on each carrier.

Optionally, the first indication information may further include information about the terminal devices that the first node is responsible for managing.

Specifically, this solution may be specific to a case in which the terminal device is visible to the radio access network device. The first indication information may further include information about terminal devices managed by the local coordinator LC, to allocate a proper first resource to the first node, thereby improving resource utilization.

It should be noted that the first node may indicate, by using an identifier of a terminal device on a sidelink (sidelink), a cell-specific radio network temporary identifier (cell dedicated wireless network temporary identifier, C-RNTI) of a terminal device in a cellular network, an identifier of a cell in which a terminal device is located, or an identifier of a radio access network device serving a terminal device, terminal devices that the first node is responsible for managing. That is, the first indication information may include at least one of the identifier of the terminal UE on the sidelink, the C-RNTI, the cell identifier, or the identifier of the radio access network device.

It should be understood that the identifier of the terminal device on the sidelink may be at least one of a layer (layer) 2 identifier, a MAC address, an internet protocol (internet protocol, IP) address, or a near field communication technology (proximity service enable, ProSe) terminal device identifier.

Optionally, the first indication information may further include transmission requirements or resource requirements of the terminal devices managed by the first node, for example, bit rates or quantities of RBs expected by the terminal devices, and the radio access network device may allocate a proper first resource to the first node based on the transmission requirements or the resource requirements of the terminal devices managed by the first node, thereby further improving resource utilization.

For example, the first node sends, to the radio access network device, a quantity of terminals managed by the first node, or a sum of resource requirements (for example, a total quantity of RBs) of all terminals, or a sum of transmission requirements (for example, a total bit rate) of all terminals. The radio access network device may allocate the proper first resource to the first node based on the foregoing information, thereby further improving resource utilization.

Optionally, the first node may send the first indication information only when receiving a broadcast message from the radio access network device.

Specifically, the broadcast message is used to indicate that a node that is responsible for managing at least one terminal device is requested in a first area. In other words, the broadcast message is used to indicate that terminal devices in the first area require a local coordinator LC. After receiving the broadcast message, the first node sends the first indication information indicating that the first node is a local coordinator LC.

Optionally, the broadcast message includes at least one of a central location (longitude and latitude) and a radius length; a central location (longitude and latitude), a length, and a width; a terminal device list; or an area identifier.

Specifically, the broadcast message may include the central location (longitude and latitude) and the radius length. To be specific, the first node may determine a circular area range, namely, the first area, based on the central location and the radius length. Alternatively, the broadcast message may include the central location (longitude and latitude), the length, and the width. In this way, the first node may determine a square area range. Alternatively, the first node determines the corresponding first area based on the area identifier (where for example, a correspondence between an area identifier and an area range is specified in a protocol). Alternatively, the broadcast message may further include the terminal device list. In other words, terminal devices that need to be managed by a node are directly learned. The terminal device list may include at least one of the identifier of the terminal on the sidelink, the C-RNTI, the cell identifier, or the identifier of the radio access network device. Alternatively, the broadcast message may further include an area identifier, a central location (longitude and latitude), and a radius length, or the broadcast message includes an area identifier, a central location (longitude and latitude), a length, and a width, so that the first node learns of a mapping relationship between an area identifier and area information (the central location and the radius length, or the central location, the length, and the width). Alternatively, when the broadcast message includes a plurality of areas that require an LC, different areas may be sorted in a specified sequence. In this way, the first node may determine a mapping relationship between an area identifier and area information based on the sorting. For example, area information that appears in the first group corresponds to an area identifier 1, area information that appears in the second group corresponds to an area identifier 2, and so on. Therefore, the radio access network device does not need to carry the area identifier in the broadcast message during broadcasting, thereby reducing resource overheads. The first node may include the area identifier in the first indication information based on the mapping relationship.

Optionally, the first node may determine, depending on whether the first node can manage the terminal devices in the first area, whether to send the first indication information.

Specifically, the first node may first determine whether the first node can manage the terminal devices in the first area, and then send the first indication information when the first node can manage the terminal devices in the first area. Correspondingly, when the first node cannot manage the terminal devices in the first area, the first indication information is not sent.

Optionally, the first indication information may further carry an area identifier of the first area.

Specifically, when the first node receives the broadcast message including the plurality of areas that requires the local coordinator LC, the first indication information may further carry the identifier of the first area, to notify the radio access network device of an area in which the first node applies for being used as the local coordinator LC.

Optionally, the first indication information may further carry a channel sensing result, namely, a channel busy ratio result.

Specifically, the first indication information sent by the first node further includes a CBR measurement result. The CBR measurement result includes a list, where each information element in the list is an identifier (pool index) of a resource pool and a corresponding CBR measurement result. The CBR measurement result may include one or more of a measurement result of a physical sidelink shared channel (physical sidelink shared channel, PSSCH) and a measurement result of a physical sidelink control channel (physical sidelink control channel, PSCCH). The radio access network device previously provides a correspondence between a resource pool and an identifier of a resource pool in a broadcast message or an RRC message. Therefore, the radio access network device may obtain a measurement result of a corresponding resource pool based on an identifier of the resource pool.

Optionally, the first indication information may be further carried in any one of a radio resource control (radio resource control, RRC) connection setup request message, an RRC connection setup complete message, and a capability message.

Specifically, the first node may send the RRC connection setup request (connection request) message to the radio access network device, and receive an RRC connection setup message sent by the radio access network device. After receiving the RRC connection setup message, the first node sends the RRC connection setup complete message to the radio access network device. The first indication information may be carried in the RRC connection setup request message or the RRC connection setup complete message.

When the first node switches from an RRC idle mode to an RRC connected mode or is handed over (handover) to a target base station, the radio access network device, namely, the base station, actively queries a capability of the first node. For example, the radio access network device sends a capability enquiry (UECapabilityEnquiry) message, and after receiving the capability enquiry message, the first node feeds back a capability (UECapabilityInformation) message to the radio access network device. The first indication information may be carried in the capability message. In this way, the first node may include the first indication information in another message and send the message to the radio access network device, and does not need to specially send the first indication information, thereby reducing resource overheads.

602: The radio access network device determines, based on a first indication information, the first resource allocated to the first node.

Specifically, the first node is the node that can be responsible for managing the at least one terminal device. For example, the first node is the local coordinator LC. The first resource is a resource allocated by the radio access network device based on the terminal devices managed by the first node, an area managed by the first node, or the channel sensing result of the first node. For example, the radio access network device may determine the first resource based on a quantity of managed or manageable terminal devices, a location of each terminal device, and/or the like. Alternatively, the radio access network device may determine the first resource based on the transmission requirements or the resource requirements of the terminal devices that are included in the first indication information. Alternatively, the radio access network device may determine the first resource based on the sum of resource requirements (for example, the total quantity of RBs) of all the terminals included in the first indication information, or the sum of transmission requirements (for example, the total bit rate) of all the terminals included in the first indication information.

It should be noted that the first resource may include the one or more resource pools mentioned above. A plurality of resource pools may belong to one carrier, or may belong to a plurality of carriers.

It should be understood that the resource in this embodiment of this application may be a radio resource.

For example, when the first indication information sent by the first node further includes the CBR measurement result, the radio access network device may further configure an appropriate first resource for the first node based on a channel busy ratio corresponding to the resource pool. The first resource may include the one or more resource pools. For example, the first node selects one or more resource pools whose channels are relatively idle, for example, one or more resource pools whose channel busy ratios are the smallest. For example, the radio access network device determines potential transmission requirements in the first area based on the first area managed by the first node, to configure the proper first resource for the first node. This is not limited in this application.

It should be noted that the first resource may be one or more resource pools on one carrier, or may be a plurality of resource pools on a plurality of carriers. This is not limited in this application. For example, the first resource is a resource pool 1 and a resource pool 2 on a carrier 1, and a resource pool 3 on a carrier 2. For a definition of the resource pool, refer to the foregoing descriptions.

It should be understood that the "local coordinator LC" in this embodiment of this application may also be referred to as a "local manager (local manager)", a "user leader (UE header)", a "scheduling terminal (scheduling UE)", a "cluster header (cluster header)", or the like. This is not limited in this application.

It should be further understood that, that the first node in this embodiment of this application can manage the terminal devices may also be understood as that the first node can be responsible for L2/L1 scheduling of the terminal devices. Optionally, the first node can further configure a sidelink, for example, configure parameters of protocol layers of the sidelink, including but not limited to one or more of PDCP, RLC, MAC and PHY layer configurations.

It should be further understood that the first node in this embodiment of this application may be the machine controller shown in FIG. 2 or a specially set local controller (physically separated from the machine controller), or may be the vehicle in V2X shown in FIG. 3.

603: The radio access network device sends first resource information to the first node, where the first resource information is used to indicate the first resource allocated to the first node. Correspondingly, the first node receives the first resource information sent by the radio access network device.

604: The first node obtains a second resource from the first resource, where the second resource is used for communication between the first node and a first terminal device, used for communication between a first terminal device and a second terminal device, or used for communication between the first node and a second node, the second resource is a part or all of the first resource, and both the first terminal device and the second terminal device are terminal devices that the first node is responsible for managing.

Specifically, the first node selects the second resource from the first resource. The second resource may be used for communication between the first node and another node (for example, the second node). The second node may also be responsible for managing the at least one terminal device. In other words, both the first node and the second node may be local coordinators LCs. Alternatively, the second resource may be used for communication between the first node and the terminal device, or may be used for communication between two terminal devices managed by the first node.

It should be noted that the second resource may be any part of resources in a resource block, or may be any one of a plurality of resource blocks obtained through division in a resource pool. For example, the first resource includes the resource pool 1 and the resource pool 2 of the carrier 1, and the resource pool 3 of the carrier 2, and the second resource may be the resource pool 1 of the carrier 1, or the resource pool 2 of the carrier 1, or the resource pool 3 of the carrier 2, or any combination of the foregoing resources.

It should be further noted that the second resource may be preconfigured for the first terminal device or the second node, or may be allocated when the first terminal device or the second node sends a request. This is not limited in this application.

For example, the first terminal device is used as an example. A case in which the second resource is preconfigured for the first terminal device may also be classified into configuring a sending resource pool and/or a receiving resource pool for the UE selection mode, or configuring a semi-persistent SPS for the scheduling mode. For example, the first node may broadcast second resource information on the sidelink. For example, the second resource includes a sending resource pool and/or a receiving resource pool on one or more carriers, and the second resource is used by the terminal device in the UE selection mode. For example, the first node may include the second resource information in an RRC reconfiguration message sent to the terminal device, the second resource may include the sending resource pool and/or the receiving resource pool on one or more carriers, and the second resource is used by UE in the SPS mode. The second resource may be determined by the first node based on the first resource, or may be a part that is of the first resource and that is explicitly indicated by the radio access network device when the radio access network device sends the first resource . For example, when the radio access network device sends the first resource, the first resource includes a sending resource pool and/or a receiving resource pool for the UE selection mode, and a sending resource pool and/or a receiving resource pool for the scheduling mode. In this case, for the UE selection mode, the first node directly broadcasts, on the sidelink, the sending resource pool and/or the receiving resource pool that is for the UE selection mode and that is in the first resource. When the first terminal device requests a resource (for example, the first terminal device in the scheduling mode), the first terminal device sends the buffer status report BSR to the first node on a sidelink interface. The BSR includes a volume of to-be-sent data on each LCG for each destination address, for example, a volume of to-be-sent data of an LCG 1 and an LCG 2 for a destination address 1, and a volume of to-be-sent data of an LCG 1, an LCG 2, and an LCG 3 for a destination address 2. The first node allocates a resource to the first terminal based on the BSR. In one case, the first node allocates the second resource to the first terminal. How the first terminal uses the second resource is based on an implementation of the first terminal. For example, the first terminal preferably sends data to the LCG 1 and the LCG 2 for the destination address 1. The second resource allocated by the first node to the first terminal may also be for a destination address. For example, the first node allocates, to the first terminal, a second resource 1 for the destination address 1 and a second resource 2 for the destination address 2. In other words, when the first node allocates the second resource to the first terminal, the second resource may further carry a destination address. For another example, when the first node allocates the second resource to the first terminal, the second resource not only carries a destination address, but also may carry an LCG identifier.

Therefore, in this embodiment of this application, the first node sends, to the radio access network device, the first indication information used to indicate that the first node is the node responsible for terminal device management. The radio access network device allocates the first resource to the first node based on terminal devices that the first node is responsible for managing, and sends the first resource information to indicate the first resource. In this way, the first resource can be allocated to the first node more properly, so that resource utilization is improved.

FIG. 7 is a schematic diagram of a resource allocation method according to another embodiment of this application.

It should be noted that, unless otherwise specified, same terms in this embodiment of this application and the embodiment shown in FIG. 6 have a same meaning.

701: A first node sends second indication information, where the second indication information is used to indicate that the first node has a capability of terminal device management.

Specifically, the second indication information may be used to indicate that the first node has a function of a local coordinator LC, so that a radio access network device considers, based on the second indication information, to configure the first node as the local coordinator LC or a local coordinator LC of an area. For example, the radio access network device receives second indication information sent by a plurality of nodes, and the radio access network device may select a target node from the plurality of nodes as the local coordinator LC or the local coordinator LC of the area. In other words, the radio access network device may determine that the first node is the local coordinator, but does not specify a specific area, or may specify a specific area.

It should be noted that the second indication information may carry an identifier of the first node. For example, the identifier of the first node may be at least one of an identifier of the first node on a sidelink, a C-RNTI, a cell identifier, or an identifier of the radio access network device.

702: The radio access network device determines, based on the second indication information, whether to use the first node as a node for terminal device management.

Specifically, the radio access network device determines, based on the capability of the first node for managing the terminal device, whether to determine the first node as a node required by a currently managed terminal device. For example, the radio access network device may determine, based on a quantity of terminal devices that can be managed by the first node, whether a requirement of terminals in an area in which the node is located can be met.

Optionally, the second indication information further includes the quantity of terminal devices that the first node can be responsible for managing. The radio access network device selects the target node as the local coordinator LC of the area based on a quantity of terminal devices that each node can be responsible for managing.

Optionally, the second indication information may also be carried in any one of an RRC connection setup request message, an RRC connection setup complete message, and a capability message.

It should be understood that the RRC connection setup request message, the RRC connection setup complete message, and the capability message are the same as those described in the foregoing embodiment. To avoid repetition, details are not described herein again.

Optionally, the first node may further send location information to the radio access network device. Correspondingly, the radio access network device receives the location information.

Specifically, the radio access network device may select the target node as the local coordinator LC in the area based on capability information and the location information of the first node, to further select a proper local coordinator LC for terminal devices in a first area. For example, the radio access network device determines, based on a location of the first node and a quantity of terminals in an area near the location or transmission requirements of the terminals, whether the first node may be set as the local coordinator LC.

Optionally, the radio access network device may further determine, based on the capability information and the location information of the first node, the quantity of terminal devices that can be managed by the first node, and a quantity of terminals included in the first area, whether to set the first node as the local coordinator LC.

Optionally, the first node may further send a channel sensing result to the radio access network device. The radio access network device determines, based on the capability information of the first node and the channel sensing result, whether to set the first node as the local coordinator LC. For example, when the first node senses that N channels are idle and N is greater than or equal to a threshold, the radio access network decides whether to set the first node as the local coordinator. The radio access network device may further make a decision based on the location information, the quantity of terminals included in the first area, and the like.

Optionally, the first node may further send an identifier of an area in which the first node is located to the radio access network device. A correspondence between an area identifier and an area range is previously included in a broadcast message by the radio access network device. For example, the broadcast message includes an area identifier, a central location (longitude and latitude), and a radius length, or includes an area identifier, a central location (longitude and latitude), a length, and a width, or includes only an area range list, where the area range list includes a plurality of groups of central locations (longitude and latitude) and radius lengths, or includes a plurality of groups of central locations (longitude and latitude), lengths, and widths. The first node and the terminal device determine a corresponding area identifier based on an order in which area ranges appear in the area range list. The correspondence between an area identifier and an area range may also be specified in a protocol. The first node determines, based on a location of the first node, an area in which the first node is located, to report the area identifier to the radio access network device. The area identifier is similar to the location information, and the radio access network device determines, according to the foregoing similar method, whether to set the first node as the local coordinator.

703: When determining that the first node is used as a node for terminal device management, the radio access network device determines a first resource allocated to the first node.

704: The radio access network device sends first resource information to the first node, where the first resource information is used to indicate the first resource allocated to the first node. Correspondingly, the first node receives the first resource information sent by the radio access network device.

705: The first node obtains a second resource from the first resource, where the second resource is used for communication between the first node and a first terminal device, used for communication between a first terminal device and a second terminal device, or used for communication between the first node and a second node, the second resource is a part or all of the first resource, and both the first terminal device and the second terminal device are terminal devices that the first node is responsible for managing.

Specifically, in this embodiment of this application, when the first node is determined as the node that can manage the terminal device, the first resource is allocated to the first node, and the first resource can be used by the first terminal device managed by the first node to communicate with the second terminal device, or used by the first node to communicate with the first terminal device, or used by the first node to communicate with the second node. This avoids a resource waste caused by allocating a large quantity of resources to a node that cannot manage the terminal device, and improves resource utilization.

Optionally, the first node may receive first notification information from the radio access network device, where the first notification information is used to indicate that the first node is the node capable of terminal device management.

Specifically, when determining that the first node is the local coordinator LC, the radio access network device may send the first notification information to the first node, where the first notification information may be used to indicate that the first node is the local coordinator LC, that is, the radio access network device configures the first node as the local coordinator LC. More specifically, the first node may send the first notification information before step 703. Alternatively, when the radio access network device sends the first notification message, the first notification message further includes the first resource information allocated to the first node.

Optionally, the first notification information is further used to indicate at least one terminal device that can be managed by the first node.

Specifically, the first notification information is further used to indicate areas in which terminal devices that can be managed by the first node are located, or directly indicate terminal devices that can be managed by the first node.

Optionally, the first notification information may include at least one of a central location (longitude and latitude) and a radius length, a central location (longitude and latitude), a length, and a width, a terminal device list, or an area identifier.

Optionally, before the first node receives the first notification information, the first node receives the broadcast message from the radio access network device. The broadcast message is used to indicate that a node responsible for managing terminal devices in the first area is required. For example, the broadcast message includes at least one of a central location (longitude and latitude) and a radius length of the first area, a central location (longitude and latitude), a length and a width of the first area, a terminal device list of the first area, or an area identifier of the first area. The first node sends a first request message based on the broadcast message, where the first request message is used to request to be responsible for managing the terminal devices in the first area. For example, the first request message includes the area identifier of the first area.

Specifically, when the radio access network device requires a local coordinator LC in an area, the radio access network device may send the broadcast message to seek the local coordinator LC. If the first node receives the broadcast message, the first node may send the first request message to the radio access network device, to request to be the local coordinator LC.

Optionally, the first node receives a second request message from the first terminal device, where the second request message is used to request to be associated with the first node.

Specifically, when the first terminal device learns that the first node is the local coordinator LC, the first terminal device may send the second request message to the first node, to request to be associated with the first node. The first terminal device learns that the first node is the local coordinator LC. This may be notified by the radio access network device, or may be notified by the first node. This is not limited in this application. For example, the radio access network device sends the broadcast message, where the broadcast message includes at least one of the identifier of the first node, and the area identifier, the central location (longitude and latitude) and the radius length, or the central location (longitude and latitude), the length, and the width. For example, the broadcast message includes the identifier of the first node and the area identifier, or the broadcast message includes the identifier of the first node, the central location (longitude and latitude), and the radius length, or the broadcast message includes the identifier of the first node, the central location (longitude and latitude), the length, and the width, or the broadcast message includes the identifier of the first node, or the broadcast message includes the identifier of the first node and a local coordinator indication. Alternatively, the first node sends a discovery message (discovery message) on a sidelink. The discovery message includes at least one of a local coordinator indication, the area identifier, the identifier of the first node, the central location (longitude and latitude) and the radius length, or the central location (longitude and latitude), the length, and the width. In this way, the terminal device may learn of first nodes that are local coordinators, or the terminal device may learn of first nodes that are local coordinators and areas that the first nodes are responsible for managing.

Optionally, the second request message may further carry a bit rate expected by the terminal device. In this way, the first node determines, based on the bit rate expected by the terminal device, whether to allow the first node to be associated with the terminal device, so that the terminal device is managed by a proper node, thereby improving communication efficiency.

Optionally, the first node may also send a response message to the first terminal device, and the response message is used to indicate whether the first node is allowed to be associated with the first terminal device.

Specifically, after receiving the second request message sent by the first terminal device, the first node may determine whether the first node is allowed to be associated with the first terminal device, and if the first node is allowed to be associated with the first terminal device, the response message sent to the first terminal device indicates that the association can be performed. When the first node is not allowed to be associated with the first terminal device, the response message sent to the first terminal device indicates that the association cannot be performed. The first node may determine, depending on whether the first node can manage the first terminal device, whether to the first node is allowed to be associated with the first terminal device.

Therefore, according to the resource allocation method in this embodiment of this application, the first node reports, to the radio access network device by using the second indication information, that the first node has a capability of managing the terminal device. The radio access network device determines, based on the second indication information, whether to determine the first node as the node for terminal device management, allocates the first resource to the first node when determining that the first node is the node for managing the terminal device, and indicates the first resource by sending the first resource information. In other words, in this embodiment of this application, the resource is allocated to the first node when the first node is determined as the node that can manage the terminal device. This avoids a resource waste caused by allocating a large quantity of resources to a node that cannot manage the terminal device, and improves resource utilization.

In the embodiment shown in FIG. 6 and the embodiment shown in FIG. 7, the following optional embodiments may further exist.

Optionally, the first node may further send third notification information to the radio access network device. The third notification information is used to indicate the terminal devices managed by the first node. For example, the third notification information includes information about one or more terminal devices associated with the first node.

Specifically, the first node may further send third notification information to the radio access network device, to indicate all terminal devices currently managed by the first node. In this way, the radio access network device may allocate the first resource to the first node based on the third notification information. Alternatively, the radio access network device may determine, based on a terminal device currently managed by the first node, whether the first node is suitable for being used as a local coordinator LC required in an area. For example, in the embodiment shown in FIG. 7, the first node sends the third notification information to the radio access network device, the radio access network device determines, based on the third notification information, the first resource allocated to the first node.

It should be noted that the third notification information may include a list, and the list includes at least one of identifiers, transmission requirements, and resource requirements of a plurality of terminal devices managed by the first node.

Optionally, the third notification information may further include the bit rate expected by the terminal device. In this way, the radio access network device can allocate the first resource to the first node more properly based on the terminal device associated with the first node and the bit rate expected by the terminal device, thereby further improving resource utilization.

Optionally, the third notification information may further include a CBR measurement result obtained after the first node performs channel sensing.

In an embodiment, the first node may send a re-association request message to the at least one terminal device when the first node can be responsible for managing the at least one terminal device. The first node receives at least one acknowledgment message of the re-association request message from the at least one terminal device. The first node determines, based on a quantity of re-association request acknowledgment messages, whether to continue to be responsible for managing the at least one terminal device.

Due to mobility of the first node, a role of the first node may change from the local coordinator LC to a common terminal device. When the first node is the local coordinator LC that manages the at least one terminal device, the first node may periodically send a re-association request message to the at least one terminal device, and each terminal device that receives the re-association request message responds to the first node with an acknowledgment message of the re-association request message. In this way, the first node determines, based on a quantity of received acknowledgment messages of the re-association request message, a quantity of terminal devices that can be currently managed, and may further determine whether to continue to be responsible for managing the at least one terminal device. For example, if the quantity of acknowledgment messages of the re-association request message received by the first node is less than a preset threshold, the first node may consider that the first node is not suitable to be used as the local coordinator LC of the at least one terminal device. If the quantity of acknowledgment messages of the re-association request message received by the first node is greater than or equal to a preset threshold, or is the same as a quantity of terminal devices managed by the first node, the first node may consider that the first node can still be used as the local coordinator LC of the at least one terminal device.

Optionally, when determining that a distance threshold for the first node to deviate from an original location is greater than the preset threshold, the first node may also determine that the first node is not suitable to be used as the local coordinator LC of the at least one terminal device.

Optionally, when determining that the first node is not suitable for being used as the local coordinator LC of the at least one terminal device, the first node sends, to the radio access network device, notification information used to indicate the first node to stop being responsible for managing the at least one terminal device. After receiving the notification information, the radio access network device may further send the broadcast message to indicate UE that the first node stops being used as the local coordinator LC, where the broadcast message may include at least one of an indication of stopping being used as the local coordinator, the identifier of the first node, the central location (longitude and latitude) and the radius length, and the central location (longitude and latitude), the length, and the width.

In another embodiment, the first node may receive third indication information from the radio access network device, where the third indication information is used to indicate the first node to stop being responsible for managing the at least one terminal device. The first node sends fourth notification information to the at least one terminal device that the first node is responsible for managing, where the fourth notification information is used to indicate the at least one terminal device to stop being responsible for managing the at least one terminal device. For example, the radio access network device sends the broadcast message to notify UE that the first node stops being used as the local coordinator LC, where the broadcast message may include at least one of an indication of stopping being used as the local coordinator, the identifier of the first node, the central location (longitude and latitude) and the radius length, and the central location (longitude and latitude), the length, and the width. Alternatively, the radio access network device sends an RRC message to notify the UE that the first node stops being used as the local coordinator LC. The RRC message may include at least one of the indication of stopping being used as the local coordinator and the identifier of the first node.

Specifically, the radio access network device may also determine whether the first node is suitable to be used as the local coordinator LC managing the at least one terminal device, and when determining that the first node is not suitable to be used as the local coordinator LC managing the at least one terminal device, the radio access network device sends the third indication information to the first node. After receiving the third indication information, the first node sends fourth notification information to a responsible terminal device, to notify the terminal device that the first node stops managing the terminal devices. Optionally, the first node may report a location of the first node in real time, and the radio access network device may determine, based on the location of the first node, whether the first node is suitable for managing the at least one terminal device. For example, the radio access network device determines, based on the location of the first node, whether the first node continues to be used as a local coordinator in the first area. Optionally, in the foregoing two embodiments, when the first node determines that the first node is not suitable for managing the at least one terminal device, the first node may send the broadcast message, to notify the at least one terminal device managed by the first node that the first node stops being used as the local coordinator LC. For example, a notification message is broadcast on the sidelink to notify the terminal managed by the first node that the first node stops being used as the local coordinator. The notification message may further include at least one of the indication of stopping being used as the local coordinator, the identifier of the first node, the central location (longitude and latitude) and the radius length, and the central location (longitude and latitude), the length, and the width. Alternatively, the first node may send a sixth notification message to the radio access network device, where the sixth notification message is used to notify the other party that the first node is not suitable to continue to manage the at least one terminal device, that is, not suitable to continue to serve as the local coordinator.

The radio access network device sends a seventh notification message, where the seventh notification message includes the identifier of the first node, or includes the identifier of the first node and a fourth indication, and is used to indicate the terminal device that the first node stops being used as the local coordinator. The seventh notification message may be an RRC message, or may be a broadcast message. When the seventh notification message is the broadcast message, the seventh notification information may include the identifier of the first node and/or the fourth indication, and may further include an area indication. The radio access network device may send the seventh notification message, or may send the seventh notification message based on the sixth notification message sent by the first node.

Specifically, the terminal device receives the broadcast message, and if the terminal device finds that a local coordinator LC associated with the terminal device is not a manager anymore, the terminal device may select a new node as the local coordinator LC. Alternatively, the terminal device is restored to listen to configuration or scheduling of the radio access network device. To be specific, when using the UE selection mode, the terminal device performs selection and communication based on a sending resource pool and/or a receiving resource pool that are/is broadcast by the radio access network device. When using the scheduling mode, the terminal device sends a BSR or traffic information (traffic pattern) to the radio access network device, and the radio access network device allocates a one-time resource such as a resource pool or a semi-persistent scheduling SPS resource to the terminal device based on the BSR or the traffic information.

Optionally, the first resource information may also be carried in an RRC connection reconfiguration message.

Specifically, after receiving the RRC connection setup complete message sent by the first node, the radio access network device may send the RRC connection reconfiguration message to the first node, and include the first resource information in the RRC connection reconfiguration message. In this way, the radio access network device does not need to specially send the first resource information, so that signaling overheads are reduced.

Optionally, the first node may send second resource information to the first terminal device, where the second resource information is used to indicate the second resource used by the first terminal device to communicate with the second terminal device, or used to indicate the second resource used by the first terminal device to communicate with the first node.

Specifically, the first node may send, to the first terminal device, the second resource information indicating the second resource. In this way, the first terminal device may send a signal to the first node on the second resource, or the first terminal device may send a signal to the second terminal device on the second resource.

It should be noted that, when the first node is a local controller in the industrial internet, the second resource information may be similar to resource pool information in the protocol TS36.331. For example, the second resource information includes a parameter such as sl-offsetIndicator, sl-Subframe, sizeSubchannel, numberSubchannel, startRB-subchannel, dataTxParameters, or ZoneID. sl-offsetIndicator is used to indicate an offset relative to the first subframe in a resource pool, sl-Subframe is used to indicate a bitmap of a resource pool (indicating whether a subframe is available), sizeSubchannel is used to indicate a quantity of RBs of each subchannel, numberSubchannel is used to indicate a quantity of subchannels included in a resource pool, startRB-subchannel is used to indicate an RB index at a start location of a resource pool, dataTxParameters is used to indicate a sending parameter, and ZoneID is used to indicate an area identifier.

Optionally, the first node may further send third resource information to the second node, where the third resource information is used to indicate the second resource used for communication between the first node and the second node.

Specifically, the first node may send, to the second node, third resource information indicating the second resource, so that the second node may send the signal to the first node on the second resource. In this way, in this embodiment of this application, communication between the second node and the first node can be adjusted by using the third resource information. This avoids interference caused by another node to communication between the second node and the first node, and improves communication efficiency.

Optionally, the first node may receive the BSR from the first terminal device, where the BSR is used to indicate a data volume of to-be-sent data of the first terminal device. The first node determines the second resource based on the first resource and the data volume of the to-be-sent data of the first terminal device. Correspondingly, the first terminal device sends the BSR to the first node.

Specifically, the first terminal device in the at least one terminal device managed by the first node may actively send the BSR to the first node to indicate the data volume of the to-be-sent data. In this way, the first node may select, based on the BSR and the first resource, a part or all of resources from the first resource as the second resource. This can avoid configuring an inappropriate second resource for the first terminal device, so that resource utilization is improved.

Optionally, the first node may receive a resource request message from the radio access network device, where the resource request message includes an identifier of the first terminal device and the BSR. Correspondingly, the radio access network device sends the resource request message to the first node.

Specifically, when the terminal device can communicate with the radio access network device by using an air interface, for example, in a scenario in cellular coverage (in cellular coverage, ICC), the BSR is used to indicate the data volume of the to-be-sent data of the first terminal device. The first terminal device may send the resource request message to the radio access network device, and the radio access network device forwards the resource request message to the first node that can manage the first terminal device, where the resource request message further carries the identifier of the first terminal device and the BSR. In this way, the first node may select a part or all of resources from the first resource as the second resource based on the data volume of the to-be-sent data of the first terminal device. This can avoid configuring an inappropriate second resource for the first terminal device, so that resource utilization is improved.

Optionally, the first node may further send fifth notification information to the radio access network device, where the fifth notification information includes usage of the first resource and/or a channel busy ratio CBR.

Specifically, the fifth notification information includes the usage of the first resource. In this way, after receiving the fifth notification information, the radio access network device may learn of the usage of the first resource allocated to the first node, and further adjust, based on the usage of the first resource, a size of a resource allocated to the first node, that is, adjust a size of the first resource. Alternatively, the fifth notification information includes the channel busy ratio, and the radio access network device adjusts, based on a channel busy degree, the first resource allocated to the first node. For example, the first node selects a relatively idle channel (in other words, one or more resource pools with a smallest channel busy ratio), so that resource utilization is further improved.

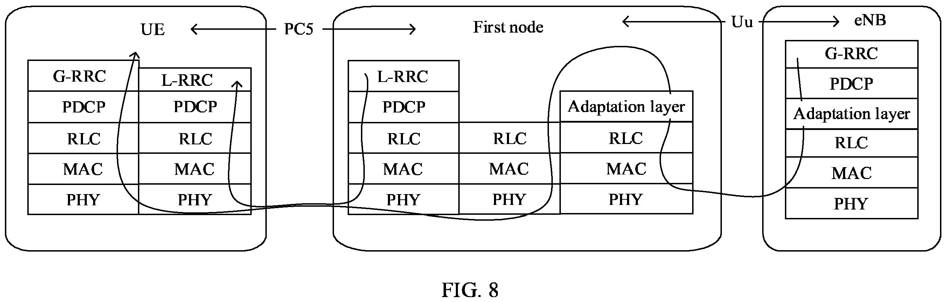

FIG. 8 is a schematic diagram of a signal transmission method according to an embodiment of this application. As shown in FIG. 8, a terminal device may directly establish a control plane connection to a radio access network device, or a first node may be used as L2 relay to help establish a control plane connection between UE and a radio access network device. The UE sends/receives control plane signaling to/from the radio access network device by using the first channel and the second channel. The first channel is a channel between the UE and the first node, and the second channel is a channel between the first node and the radio access network device. The first channel mainly uses a sidelink sidelink or PC5 technology, or may use another short-distance transmission technology. The second channel mainly uses an LTE/NR air interface technology. The first channel includes a global radio resource control (global RRC, G-RRC), a packet data convergence protocol PDCP layer, a radio link control RLC layer, a media access control MAC layer, and a physical PHY layer. A G-RRC layer and a PDCP layer of the terminal device correspond to a G-RRC protocol layer and a PDCP layer on a radio access network device side, and an RLC/a MAC/a PHY of the terminal device is in a one-to-one correspondence with a PDCP/an RLC/a MAC/a PHY layer on a first node side. The second channel includes an adaptation layer, an RLC layer, a MAC layer, and a PHY layer, and is in a one-to-one correspondence with an adaptation layer/RLC/MAC/PHY protocol layer on a radio access network device side. The foregoing protocol layer may not exist according to an actual situation. For example, the first channel may include only the G-RRC layer, the PDCP layer, the MAC layer, and the PHY layer.

Optionally, the first node receives/sends the control plane signaling from/to a first terminal device through the second channel, where the second channel includes a local local-radio resource control L-RRC layer, the PDCP layer, an RLC layer, the MAC layer, and the PHY layer. The foregoing protocol layer may not exist according to an actual situation. For example, the first channel may include only the L-RRC layer, the PDCP layer, the MAC layer, and the PHY layer.

Specifically, the first node may sequentially send the control plane signaling to the first terminal device by using the L-RRC layer, the PDCP layer, the RLC layer, the MAC layer, and the PHY layer, where the L-RRC layer may be used to determine the foregoing second resource, and may be further configured to determine one or more pieces of configuration information of the PDCP/RLC/MAC/PHY layer of the first channel.

Optionally, the first node sends/receives first user plane data to/from the first terminal device through a third channel, where the third channel includes an application APP layer, a MAC layer, and a PHY layer.

Specifically, the first node may sequentially send the user data to the first terminal device by using the APP layer, the MAC layer, and the PHY layer. Compared with the relay node in the solution shown in FIG. 4, the first node in this embodiment of this application has the APP layer, and can perform a function corresponding to the APP layer, so that compatibility of the first node is improved.

It should be understood that the APP layer may be an Ethernet (EtherNet) protocol layer in an industrial Internet.

Optionally, at least one of a service data adaptation (service data adaptation, SDAP) layer, a PDCP layer, and an RLC layer may be further sequentially set between the APP layer and the MAC layer in the third channel.

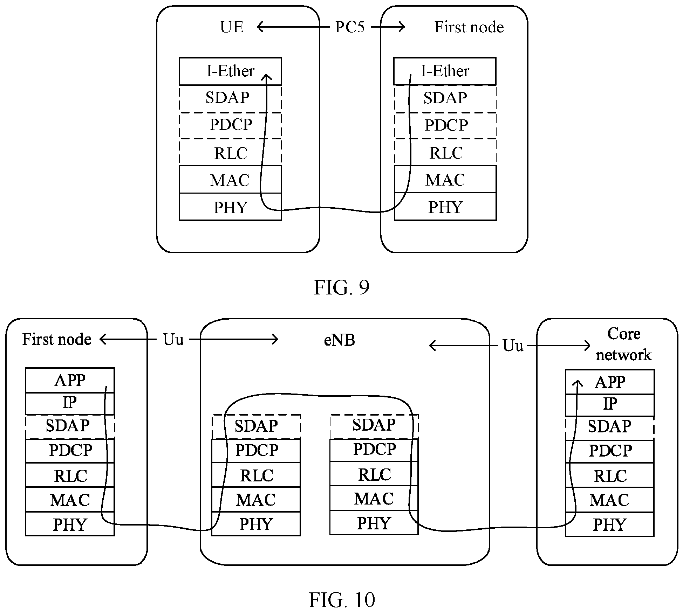

FIG. 9 is a schematic diagram of a signal transmission method according to another embodiment of this application. FIG. 9 is a schematic diagram of a local user plane protocol stack for communication between a local coordinator LC and a terminal device. A first node may also receive/send second user plane data from/to a radio access network device by using a fourth channel. The fourth channel includes an APP layer, an internet protocol IP layer, an SDAP layer, a PDCP layer, an RLC layer, a MAC layer, and a PHY layer. The foregoing protocol layer may not exist according to an actual situation. For example, the fourth channel may include only the APP layer, the IP layer, the MAC layer, and the PHY layer. The APP layer or the IP layer of the fourth channel are in a one-to-one correspondence with an APP/IP layer on a core network side, and the PDCP/RLC/MAC/PHY layer of the fourth channel is in a one-to-one correspondence with a PDCP/an RLC/a MAC/a PHY layer on a radio access network device side.

Specifically, the first node may alternatively sequentially send the user plane data to the radio access network device by using the APP layer, the internet protocol IP layer, the PDCP layer, the RLC layer, the MAC layer, and the PHY layer, and the radio access network device may forward the user plane data to the core network device. In this way, compared with the relay device in the solution shown in FIG. 4, the first node in this embodiment of this application includes the IP layer and the APP layer. In other words, the first node has functions of the APP layer and the IP layer, thereby improving compatibility of the first node.

FIG. 10 is a schematic diagram of a global user plane protocol stack for communication between a local coordinator LC, a radio access network device, and a core network device.

Optionally, when a terminal device is handed over, a source base station sends a handover request (handover request) to a target base station, and the target base station includes, in a handover response (handover response) message, at least one of an identifier of the local coordinator, frequency information of a local coordinator broadcast channel, and second resource information for a UE selection mode. For example, the handover response includes an LC ID 1 and an LC ID 2, or includes an LCID 1 and second resource information 1, and an LCID 2 and second resource information 2, or includes an LCID 1 and frequency information 1 of the broadcast channel, and an LCID 2 and frequency information 2 of the broadcast channel. The source base station sends at least one of the identifier of the local coordinator, the frequency information of the local coordinator broadcast channel, and the second resource information for the UE selection mode to the terminal device. The terminal device searches for a first node based on the foregoing information. For example, the terminal device searches for a broadcast message of the local coordinator on a corresponding frequency based on frequency information of the broadcast channel, to discover local coordinators across cells, thereby implementing seamless connection between local coordinators.

The foregoing describes in detail the resource allocation method according to the embodiments of this application. The following describes a communications apparatus for resource allocation according to an embodiment of this application.

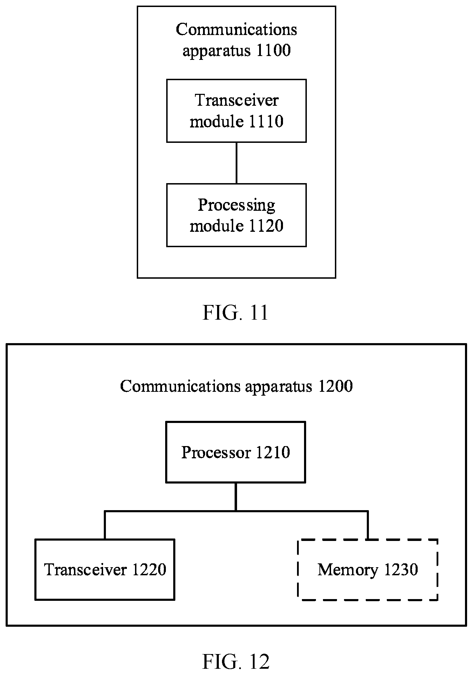

FIG. 11 is a schematic block diagram of a communications apparatus 1100 for resource allocation according to an embodiment of this application.

It should be understood that the communications apparatus 1100 may correspond to the first node in the embodiments shown in FIG. 6 to FIG. 9, and may have any function of the first node in the methods. The communications apparatus 1100 may include a transceiver module 1110 and a processing module 1120.

In an embodiment, the transceiver module 1110 is configured to send first indication information to a radio access network device, where the first indication information is used to indicate that the first node is a node responsible for terminal device management.

The transceiver module 1110 is configured to receive first resource information from the radio access network device, where the first resource information is used to indicate a first resource allocated to the first node, and the first resource is determined by the radio access network device based on the first indication information.

The processing module 1120 is configured to obtain a second resource from the first resource, where the second resource is used for communication between the first node and a first terminal device, used for communication between a first terminal device and a second terminal device, or used for communication between the first node and a second node, the second resource is a part or all of the first resource, and both the first terminal device and the second terminal device are terminal devices that the first node is responsible for managing.

In another embodiment, the transceiver module 1110 is configured to send second indication information to a radio access network device, where the second indication information is used to indicate that the first node has a capability of terminal device management, and the second indication information is used by the radio access network device to determine whether to use the first node as a node responsible for terminal device management.

The transceiver module 1110 is further configured to receive first resource information from the radio access network device, where the first resource information is used to indicate a first resource allocated to the first node, and the first resource is allocated by the radio access network device to the first node when the radio access network device determines, based on the second indication information, to use the first node as a node for terminal device management.

The processing module 1120 is configured to obtain a second resource from the first resource, where the second resource is used for communication between the first node and a first terminal device, used for communication between a first terminal device and a second terminal device, or used for communication between the first node and a second node, the second resource is a part or all of the first resource, and both the first terminal device and the second terminal device are terminal devices that the first node is responsible for managing.

Optionally, the transceiver module 1110 is further configured to receive first notification information, where the first notification information is used to indicate that the first node is used as the node responsible for terminal device management.

Optionally, the first notification information is further used to indicate an area in which terminal devices that the first node is responsible for managing are located.

Optionally, the first notification information includes at least one of a central location and a radius length, a central location, a length, and a width, a terminal device list, or an area identifier.

Optionally, the transceiver module 1110 is further configured to send location information of the first node to the radio access network device, where the location information of the first node is used by the radio access network device to determine whether the first node can be the node responsible for terminal device management.

Optionally, the transceiver module 1110 is further configured to receive a broadcast message from the radio access network device, where the broadcast message is used to indicate that a node responsible for managing terminal devices in a first area is required.

The processing module 1120 is further configured to send a first request message based on the broadcast message by using the transceiver module, where the first request message is used to request to be responsible for managing the terminal devices in the first area.

Optionally, the transceiver module 1110 is further configured to send second notification information to a terminal device, where the second notification information is used to indicate that the first node is the node that can be responsible for terminal device management.

Optionally, the transceiver module 1110 is further configured to send third notification information to the radio access network device, where the third notification information is used to indicate the terminal devices managed by the first node.

Optionally, the transceiver module 1110 is further configured to receive third indication information from the radio access network device, where the third indication information is used to indicate the first node to stop being responsible for terminal device management.

The transceiver module 1110 is further configured to send fourth notification information to the terminal devices managed by the first node, where the fourth notification information is used to notify the terminal device that the first node stops being responsible for terminal device management.

FIG. 12 is a schematic block diagram of a communications apparatus 1200 for resource allocation according to an embodiment of this application. The communications apparatus 1200 may be the first node shown in FIG. 6 to FIG. 9. The communications apparatus may use a hardware architecture shown in FIG. 12. The communications apparatus may include a processor 1210 and a transceiver 1220. Optionally, the communications apparatus may further include a memory 1230. The processor 1210, the transceiver 1220, and the memory 1230 communicate with each other by using an internal connection path. A related function implemented by the processing module 1120 in FIG. 11 may be implemented by the processor 1210, and a related function implemented by the transceiver module 1110 may be implemented by the processor 1210 by controlling the transceiver 1220.

Optionally, the processor 1210 may be a general-purpose central processing unit (central processing unit, CPU), a microprocessor, an application-specific integrated circuit (application-specific integrated circuit, ASIC), a dedicated processor, or one or more integrated circuits configured to perform the technical solutions in the embodiments of this application. Alternatively, the processor may be one or more devices, circuits, and/or processing cores for processing data (for example, computer program instructions). For example, the processor may be a baseband processor or a central processing unit. The baseband processor may be configured to process a communications protocol and communications data. The central processing unit may be configured to control the communications apparatus (for example, a base station, a terminal, or a chip), execute a software program, and process data of the software program.

Optionally, the processor 1210 may include one or more processors, for example, include one or more central processing units (central processing unit, CPU). When the processor is one CPU, the CPU may be a single-core CPU, or may be a multi-core CPU.

The transceiver 1220 is configured to send and receive data and/or a signal, and receive data and/or a signal. The transceiver may include a transmitter and a receiver. The transmitter is configured to send the data and/or the signal, and the receiver is configured to receive the data and/or the signal.

The memory 1230 includes but is not limited to a random access memory (random access memory, RAM), a read-only memory (read-only memory, ROM), an erasable programmable memory (erasable programmable read only memory, EPROM), and a compact disc read-only memory (compact disc read-only memory, CD-ROM). The memory 1230 is configured to store related instructions and data.

The memory 1230 is configured to store program code and data of the first node, and may be a separate device or integrated into the processor 1210.

Specifically, the processor 1210 is configured to control the transceiver to perform information transmission with a radio access network device or a terminal device. For details, refer to the descriptions in the foregoing method embodiments. Details are not described herein again.

It may be understood that FIG. 12 merely shows a simplified design of the communications apparatus. During actual application, the communications apparatus may further include other necessary components, including but not limited to any quantity of transceivers, processors, controllers, memories, and the like, and all terminals that can implement this application shall fall within the protection scope of this application.

In a possible design, the communications apparatus 1200 may be a chip, for example, may be a communications chip available for a terminal, and configured to implement a related function of the processor 1210 in the terminal. The chip may be a field programmable gate array, a dedicated integrated chip, a system chip, a central processing unit, a network processor, a digital signal processing circuit, or a microcontroller for implementing a related function, or may be a programmable controller or another integrated chip. Optionally, the chip may include one or more memories, and be configured to store program code. When the code is executed, the processor is enabled to implement a corresponding function.

During specific implementation, in an embodiment, the communications apparatus 1200 may further include an output device and an input device. The output device communicates with the processor 1210, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device communicates with the processor 601, and may receive an input from a user in a plurality of manners. For example, the input device may be a mouse, a keyboard, a touchscreen device, a sensing device, or the like.

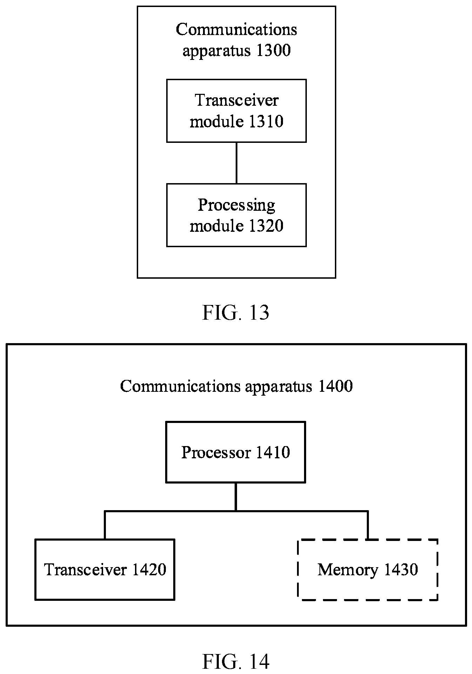

FIG. 13 is a schematic block diagram of a communications apparatus 1300 for resource allocation according to an embodiment of this application.

It should be understood that the communications apparatus 1300 may correspond to the radio access network device in the embodiments shown in FIG. 6 to FIG. 9, and may have any function of the radio access network device in the methods. The communications apparatus 1300 may include a transceiver module 1310 and a processing module 1320.

In an embodiment, the transceiver module 1310 is configured to receive first indication information from a first node, where the first indication information is used to indicate that the first node is a node responsible for terminal device management.

The processing module 1320 is configured to determine, based on the first indication information, a first resource allocated to the first node.

The transceiver module 1310 is further configured to send first resource information to the first node, where the first resource information is used to indicate the first resource.

In another embodiment, the transceiver module 1310 is further configured to receive second indication information from a first node, where the second indication information is used to indicate that the first node has a capability of terminal device management.

The processing module 1320 is configured to determine, based on the second indication information, whether to use the first node as a node for terminal device management.

The processing module 1320 is further configured to: when determining to use the first node as the node for terminal device management, determine a first resource allocated to the first node.

The transceiver module 1310 is further configured to send first resource information to the first node, where the first resource information is used to indicate the first resource.

Optionally, the transceiver module 1310 is further configured to send first notification information, where the first notification information is used to indicate that the first node is used as the node responsible for terminal device management.

Optionally, the first notification information is further used to indicate an area in which terminal devices that the first node is responsible for managing are located.

Optionally, the first notification information includes at least one of a central location and a radius length, a central location, a length, and a width, a terminal device list, or an area identifier.

Optionally, the transceiver module 1310 is further configured to receive location information of the first node from the first node.

The processing module 1320 is specifically configured to:
determine, based on the second indication information and the location information of the first node, whether to use the first node as the node for terminal device management.

Optionally, the transceiver module 1310 is further configured to send a broadcast message, where the broadcast message is used to indicate that a node responsible for managing terminal devices in a first area is required.

The transceiver module 1310 is further configured to receive a first request message from the first node, where the first request message is used to request to be responsible for managing the terminal devices in the first area.

Optionally, the transceiver module 1310 is further configured to receive third notification information from the first node, where the third notification information is used to indicate the terminal devices managed by the first node.

Optionally, the transceiver module 1310 is further configured to send third indication information to the first node, where the third indication information is used to indicate the first node to stop being responsible for terminal device management.

FIG. 14 shows a communications apparatus 1400 for resource allocation according to an embodiment of this application. The communications apparatus 1400 may be the radio access network device in FIG. 1 and FIG. 6 to FIG. 9. The communications apparatus may use a hardware architecture shown in FIG. 14. The communications apparatus may include a processor 1410 and a transceiver 1420. Optionally, the communications apparatus may further include a memory 1430. The processor 1410, the transceiver 1420, and the memory 1430 communicate with each other by using an internal connection path. A related function implemented by the processing module 820 in FIG. 8 may be implemented by the processor 1410, and a related function implemented by the transceiver module 810 may be implemented by the processor 1410 by controlling the transceiver 1420.

Optionally, the processor 1410 may be a general-purpose central processing unit (central processing unit, CPU), a microprocessor, an application-specific integrated circuit (application-specific integrated circuit, ASIC), a dedicated processor, or one or more integrated circuits configured to perform the technical solutions in the embodiments of this application. Alternatively, the processor may be one or more devices, circuits, and/or processing cores for processing data (for example, computer program instructions). For example, the processor may be a baseband processor or a central processing unit. The baseband processor may be configured to process a communications protocol and communications data. The central processing unit may be configured to control the communications apparatus (for example, a base station, a terminal, or a chip), execute a software program, and process data of the software program.

Optionally, the processor 1410 may include one or more processors, for example, include one or more central processing units (central processing unit, CPU). When the processor is one CPU, the CPU may be a single-core CPU, or may be a multi-core CPU.

The transceiver 1420 is configured to send and receive data and/or a signal, and receive data and/or a signal. The transceiver may include a transmitter and a receiver. The transmitter is configured to send the data and/or the signal, and the receiver is configured to receive the data and/or the signal.

The memory 1430 includes but is not limited to a random access memory (random access memory, RAM), a read-only memory (read-only memory, ROM), an erasable programmable memory (erasable programmable read only memory, EPROM), and a compact disc read-only memory (compact disc read-only memory, CD-ROM). The memory 1430 is configured to store related instructions and data.

The memory 1430 is configured to store program code and data of a terminal, and may be a separate device or integrated into the processor 1410.

Specifically, the processor 1410 is configured to control the transceiver to perform information transmission with the radio access network device. For details, refer to the descriptions in the foregoing method embodiments. Details are not described herein again.

During specific implementation, in an embodiment, the communications apparatus 1400 may further include an output device and an input device. The output device communicates with the processor 1410, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device communicates with the processor 601, and may receive an input from a user in a plurality of manners. For example, the input device may be a mouse, a keyboard, a touchscreen device, a sensing device, or the like.

It may be understood that FIG. 14 merely shows a simplified design of the communications apparatus. During actual application, the communications apparatus may further include other necessary components, including but not limited to any quantity of transceivers, processors, controllers, memories, and the like, and all terminals that can implement this application shall fall within the protection scope of this application.

In a possible design, the communications apparatus 1400 may be a chip, for example, may be a communications chip available for a terminal, and configured to implement a related function of the processor 1410 in the terminal. The chip may be a field programmable gate array, a dedicated integrated chip, a system chip, a central processing unit, a network processor, a digital signal processing circuit, or a microcontroller for implementing a related function, or may be a programmable controller or another integrated chip. Optionally, the chip may include one or more memories, and be configured to store program code. When the code is executed, the processor is enabled to implement a corresponding function.

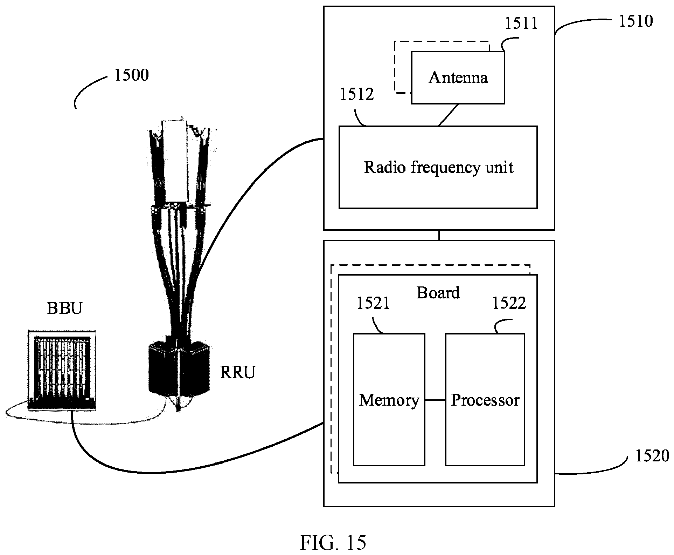

When the communications apparatus in this embodiment is a radio access network device, the radio access network device may be shown in FIG. 15. The communications apparatus 1500 includes one or more radio frequency units, for example, a remote radio unit (remote radio unit, RRU) 1510 and one or more baseband units 1520 (baseband unit, BBU) (which may also be referred to as a digital unit (digital unit, DU). The RRU 1510 may be referred to as a transceiver module, and corresponds to the transceiver module 810 in FIG. 8. Optionally, the transceiver module may also be referred to as a transceiver machine, a transceiver circuit, a transceiver, or the like, and may include at least one antenna 1511 and a radio frequency unit 1512. The RRU 1510 is mainly configured to: receive and send a radio frequency signal, and perform conversion between the radio frequency signal and a baseband signal. For example, the RRU 1510 is configured to send indication information to a terminal device. The BBU 1520 is mainly configured to: perform baseband processing, control a base station, and the like. The RRU 1510 and the BBU 1520 may be physically disposed together, or may be physically disposed separately, that is, a distributed base station.

The BBU 1520 is a control center of the base station, and may also be referred to as a processing module. The BBU 1520 may correspond to the processing module 820 in FIG. 8, and is mainly configured to complete a baseband processing function such as channel encoding, multiplexing, modulation, or spreading. For example, the BBU (the processing module) may be configured to control the base station to perform an operation procedure related to the radio access network device in the foregoing method embodiments, for example, to generate the foregoing indication information.

In an example, the BBU 1520 may include one or more boards, and a plurality of boards may jointly support a radio access network (such as an LTE network) having a single access standard, or may separately support radio access networks (such as an LTE network, a 5G network, or another network) having different access standards. The BBU 1520 further includes a memory 1521 and a processor 1522. The memory 1521 is configured to store instructions and data that are necessary. The processor 1522 is configured to control the base station to perform a necessary action, for example, configured to control the base station to perform the operation procedure related to the radio access network device in the foregoing method embodiments. The memory 1521 and the processor 1522 may serve one or more boards. In other words, a memory and a processor may be independently disposed on each board. Alternatively, a plurality of boards may share a same memory and a same processor. In addition, a necessary circuit may further be disposed on each board.

In another form of this embodiment, a computer-readable storage medium is provided. The computer-readable storage medium stores instructions. When the instructions are executed, the method in the foregoing method embodiments is performed.

In another form of this embodiment, a computer program product including instructions is provided. When the instructions are executed, the method in the foregoing method embodiments is performed.

All or some of the foregoing embodiments may be implemented by software, hardware, firmware, or any combination thereof. When software is used for implementation, all or some of the embodiments may be implemented in a form of computer program product. The computer program product includes one or more computer instructions. When the computer instructions are loaded and executed on a computer, all or some of the procedures or functions according to the embodiments of this application are generated. The computer may be a general-purpose computer, a dedicated computer, a computer network, or another programmable communications apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disk, SSD)), or the like.

It should be understood that, the processor may be an integrated circuit chip, and has a signal processing capability. In an implementation process, the steps in the foregoing method embodiments may be completed by using a hardware integrated logic circuit in the processor or instructions in a form of software. The foregoing processor may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, or a discrete hardware component. The processor may implement or perform the methods, the steps, and the logical block diagrams that are disclosed in the embodiments of this application. The general-purpose processor may be a microprocessor, or the processor may be any conventional processor or the like. The steps of the method disclosed with reference to the embodiments of this application may be directly performed and completed by using a hardware decoding processor, or may be performed and completed by using a combination of hardware and software modules in a decoding processor. The software module may be located in a mature storage medium in the field, for example, a random access memory, a flash memory, a read-only memory, a programmable read-only memory, an electrically erasable programmable memory, or a register. The storage medium is located in the memory, and the processor reads information in the memory, and completes the steps in the foregoing methods by using hardware of the processor.

It may be understood that the memory in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. According to a description that is used as an example instead of a limitation, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchronous link DRAM, SLDRAM), and a direct rambus random access memory (direct rambus RAM, DR RAM).

In this application, "at least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character "/" usually indicates an "or" relationship between the associated objects. "At least one item (piece) of the following" or a similar expression thereof means any combination of these items, including a singular item (piece) or any combination of plural items (pieces). For example, at least one of a, b, and c may indicate: a, b, c, a-b, a-c, b-c, or a-b-c, where a, b, and c may be singular or plural.

It should be understood that "one embodiment" or "an embodiment" mentioned in the entire specification means that particular features, structures, or characteristics related to the embodiment are included in at least one embodiment of the present invention. Therefore, "in one embodiment" or "in an embodiment" appearing throughout the entire specification does not necessarily refer to a same embodiment. In addition, these particular features, structures, or characteristics may be combined in one or more embodiments in any appropriate manner. It should be understood that sequence numbers of the foregoing processes do not mean execution sequences in the embodiments of the present invention. The execution sequences of the processes should be determined based on functions and internal logic of the processes, and should not be construed as any limitation on the implementation processes of the embodiments of the present invention.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that runs on a computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using a signal).

It should be further understood that "first", "second", and various numerical symbols in this specification are merely used for distinguishing for ease of description, and are not used to limit a scope of the embodiments of this application.

It should be understood that the term "and/or" in this specification describes only an association relationship between associated objects and represents that three relationships may exist. For example, A and/or B may represent the following three cases: Only A exists, both A and B exist, and only B exists. When only A or only B exists, a quantity of A or B is not limited. In an example in which only A exists, it may be understood as that there is one or more A.

A person of ordinary skill in the art may be aware that, with reference to the examples described in the embodiments disclosed in this specification, units and algorithm steps may be implemented by electronic hardware or a combination of computer software and electronic hardware. Whether the functions are performed in a manner of hardware or software depends on a particular application and a design constraint of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed systems, apparatuses, and methods may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

Units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, the functional units in the embodiments of this application may be integrated into one processing unit, or each of the units may exist alone physically, or two or more units may be integrated into one unit.

When functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, or a radio access network device) to perform all or some of the steps of the methods described in the embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

## Claims

1. A resource allocation method, comprising:
sending (701), by a first node, second indication information to a radio access network device, wherein the second indication information is used to indicate that the first node has a capability of terminal device management;
receiving, by the first node, first notification information, wherein the first notification information is used to indicate that the first node is used as the node responsible for terminal device management;
receiving (704), by the first node, first resource information from the radio access network device, wherein the first resource information is used to indicate a first resource allocated to the first node, and the first resource is allocated by the radio access network device to the first node when the radio access network device determines, based on the second indication information, to use the first node as a node for terminal device management; and
obtaining (705), by the first node, a second resource from the first resource, wherein the second resource is used for communication between the first node and a first terminal device, used for communication between a first terminal device and a second terminal device, or used for communication between the first node and a second node, the second resource is a part or all of the first resource, and both the first terminal device and the second terminal device are terminal devices that the first node is responsible for managing;
wherein
the first notification information is further used to indicate an area in which terminal devices that the first node is responsible for managing are located, and the first notification information comprises at least one of: a central location and a radius length; a central location, a length, and a width; a terminal device list; or an area identifier.

2. The method according to claim 1, wherein the method further comprises:
sending, by the first node, second notification information to a terminal device, wherein the second notification information is used to indicate that the first node is the node responsible for terminal device management.

3. The method according to any one of claims 1 to 2, wherein before the receiving, by the first node, first resource information from the radio access network device, the method further comprises:
sending, by the first node, third notification information to the radio access network device, wherein the third notification information is used to indicate the terminal devices managed by the first node.

4. The method according to any one of claims 1 to 3, wherein the method further comprises:
receiving, by the first node, third indication information from the radio access network device, wherein the third indication information is used to indicate the first node to stop being responsible for terminal device management; and
sending, by the first node, fourth notification information to the terminal devices managed by the first node, wherein the fourth notification information is used to notify the terminal device that the first node stops being responsible for terminal device management.

5. A resource allocation method, comprising:
receiving (701), by a radio access network device, second indication information from a first node, wherein the second indication information is used to indicate that the first node has a capability of terminal device management;
sending, by the radio access network device, first notification information, wherein the first notification information is used to indicate that the first node is used as the node responsible for terminal device management;
determining (702), by the radio access network device based on the second indication information, whether to use the first node as a node for terminal device management;
when determining to use the first node as the node for terminal device management, determining (703), by the radio access network device, a first resource allocated to the first node; and
sending (704), by the radio access network device, first resource information to the first node, wherein the first resource information is used to indicate the first resource;
wherein
the first notification information is further used to indicate an area in which terminal devices that the first node is responsible for managing are located, and the first notification information comprises at least one of: a central location and a radius length; a central location, a length, and a width; a terminal device list; or an area identifier.

6. The method according to claim 5, wherein the method further comprises:
receiving, by the radio access network device, location information of the first node from the first node; and
the determining, by the radio access network device based on the second indication information, whether to use the first node as a node for terminal device management comprises:
determining, by the radio access network device based on the second indication information and the location information of the first node, whether to use the first node as the node for terminal device management.

7. The method according to any one of claims 5 to 6, wherein before the sending, by the radio access network device, first resource information to the first node, the method further comprises:
receiving, by the radio access network device, third notification information from the first node, wherein the third notification information is used to indicate the terminal devices managed by the first node.

8. The method according to any one of claims 5 to 7, wherein the method further comprises:
sending, by the radio access network device, third indication information to the first node, wherein the third indication information is used to indicate the first node to stop being responsible for terminal device management.

9. A communication apparatus, comprising modules for carrying out steps of the method according to any one of claims 1 to 4.

10. A communication apparatus, comprising modules for carrying out steps of the method according to any one of claims 5 to 8.

11. A communication system, comprising the communication apparatus according to claim 9 and the communication apparatus according to claim 10.

12. A computer program product, comprising computer program code which, when executed by a processor of an apparatus, cause the apparatus to carry out the steps of the method according to any one of claims 1 to 8.

13. A computer-readable storage medium comprising the computer program product according to claim 12.

## Patentansprüche

1. Ressourcenzuteilungsverfahren, umfassend:
Senden (701) zweiter Angabeinformationen seitens eines ersten Knotens an eine Funkzugangsnetzwerkvorrichtung, wobei die zweiten Angabeinformationen verwendet werden, um anzugeben, dass der erste Knoten eine Fähigkeit zum Endgerätvorrichtungsmanagement hat;
Empfangen erster Benachrichtigungsinformationen seitens des ersten Knotens, wobei die ersten Benachrichtigungsinformationen verwendet werden, um anzugeben, dass der erste Knoten als der Knoten verwendet wird, der für das Endgerätvorrichtungsmanagement verantwortlich ist;
Empfangen (704) erster Ressourceninformationen von der Funkzugangsnetzwerkvorrichtung seitens des ersten Knotens, wobei die ersten Ressourceninformationen verwendet werden, um eine erste Ressource anzugeben, die dem ersten Knoten zugeteilt wird, und die erste Ressource durch die Funkzugangsnetzwerkvorrichtung dem ersten Knoten zugeteilt wird, wenn die Funkzugangsnetzwerkvorrichtung basierend auf den zweiten Angabeinformationen bestimmt, dass der erste Knoten als Knoten für das Endgerätvorrichtungsmanagement verwendet werden soll, und
Erhalten (705) einer zweiten Ressource von der ersten Ressource seitens des ersten Knotens, wobei die zweite Ressource zur Kommunikation zwischen dem ersten Knoten und einer ersten Endgerätvorrichtung verwendet wird, die für die Kommunikation zwischen einer ersten Endgerätvorrichtung und einer zweiten Endgerätvorrichtung verwendet wird, oder zur Kommunikation zwischen dem ersten Knoten und einem zweiten Knoten verwendet wird, wobei die zweite Ressource ein Teil oder alles von der ersten Ressource ist und sowohl die erste Endgerätvorrichtung als auch die zweite Endgerätvorrichtung Endgerätvorrichtungen sind, für deren Management der erste Knoten verantwortlich ist; wobei
die ersten Benachrichtigungsinformationen des Weiteren verwendet werden, um ein Gebiet anzugeben, in dem sich Endgerätvorrichtungen befinden, für deren Management der erste Knoten verantwortlich ist, und wobei die ersten Benachrichtigungsinformationen mindestens eines von: einem zentralen Ort und einer Radiuslänge; einem zentralen Ort, einer Länge und einer Breite; einer Endgerätvorrichtungsliste; oder einer Gebietskennung umfassen.

2. Verfahren nach Anspruch 1, wobei das Verfahren ferner umfasst:
Senden zweiter Benachrichtigungsinformationen an eine Endgerätvorrichtung seitens des ersten Knotens, wobei die zweiten Benachrichtigungsinformationen verwendet werden, um anzugeben, dass der erste Knoten der Knoten ist, der für das Endgerätvorrichtungsmanagement verantwortlich ist.

3. Verfahren nach einem der Ansprüche 1 bis 2, wobei das Verfahren vor dem Empfangen erster Ressourceninformationen von der Funkzugangsnetzwerkvorrichtung seitens des ersten Knotens ferner umfasst:
Senden dritter Benachrichtigungsinformationen an die Funkzugangsnetzwerkvorrichtung seitens des ersten Knotens, wobei die dritten Benachrichtigungsinformationen verwendet werden, um die Endgerätvorrichtungen anzugeben, die von dem ersten Knoten gemanagt werden.

4. Verfahren nach einem der Ansprüche 1 bis 3, wobei das Verfahren ferner umfasst:
Empfangen dritter Angabeinformationen von der Funkzugangsnetzwerkvorrichtung seitens des ersten Knotens, wobei die dritten Angabeinformationen verwendet werden, um dem ersten Knoten anzugeben, seine Verantwortlichkeit für das Endgerätvorrichtungsmanagement zu stoppen; und
Senden vierter Benachrichtigungsinformationen an die Endgerätvorrichtungen, die von dem ersten Knoten gemanagt werden, seitens des ersten Knotens, wobei die vierten Benachrichtigungsinformationen verwendet werden, um die Endgerätvorrichtung zu benachrichtigen, dass die Verantwortlichkeit des ersten Knotens für das Endgerätvorrichtungsmanagement gestoppt wurde.

5. Ressourcenzuteilungsverfahren, umfassend:
Empfangen (701) zweiter Angabeinformationen von einem ersten Knoten seitens einer Funkzugangsnetzwerkvorrichtung, wobei die zweiten Angabeinformationen verwendet werden, um anzugeben, dass der erste Knoten eine Fähigkeit zum Endgerätvorrichtungsmanagement hat;
Senden erster Benachrichtigungsinformationen seitens der Funkzugangsnetzwerkvorrichtung, wobei die ersten Benachrichtigungsinformationen verwendet werden, um anzugeben, dass der erste Knoten als der Knoten verwendet wird, der für das Endgerätvorrichtungsmanagement verantwortlich ist;
Bestimmen (702) seitens der Funkzugangsnetzwerkvorrichtung basierend auf den zweiten Angabeinformationen, ob der erste Knoten als Knoten für Endgerätvorrichtungsmanagement verwendet werden soll,
wenn bestimmt wird, dass der erste Knoten als Knoten für Endgerätvorrichtungsmanagement verwendet werden soll, Bestimmen (703) einer ersten Ressource, die dem ersten Knoten zugeteilt wird, seitens der Funkzugangsnetzwerkvorrichtung; und Senden (704) erster Ressourceninformationen an den ersten Knoten seitens der Funkzugangsnetzwerkvorrichtung, wobei die ersten Ressourceninformationen verwendet werden, um die erste Ressource anzugeben, wobei
die ersten Benachrichtigungsinformationen des Weiteren verwendet werden, um ein Gebiet anzugeben, in dem sich Endgerätvorrichtungen befinden, für deren Management der erste Knoten verantwortlich ist, und wobei die ersten Benachrichtigungsinformationen mindestens eines von: einem zentralen Ort und einer Radiuslänge; einem zentralen Ort, einer Länge und einer Breite; einer Endgerätvorrichtungsliste; oder einer Gebietskennung umfassen.

6. Verfahren nach Anspruch 5, wobei das Verfahren ferner umfasst:
Empfangen von Ortsinformationen des ersten Knotens von dem ersten Knoten seitens der Funkzugangsnetzwerkvorrichtung; und
wobei die Bestimmung seitens der Funkzugangsnetzwerkvorrichtung basierend auf den zweiten Angabeinformationen, ob der erste Knoten als Knoten für Endgerätvorrichtungsmanagement verwendet werden soll, umfasst:
Bestimmen seitens der Funkzugangsnetzwerkvorrichtung basierend auf den zweiten Angabeinformationen und den Ortsinformationen des ersten Knotens, ob der erste Knoten als Knoten für Endgerätvorrichtungsmanagement verwendet werden soll.

7. Verfahren nach einem der Ansprüche 5 bis 6, wobei das Verfahren vor dem Senden erster Ressourceninformationen an den ersten Knoten seitens der Funkzugangsnetzwerkvorrichtung ferner umfasst:
Empfangen dritter Benachrichtigungsinformationen von dem ersten Knoten seitens der Funkzugangsnetzwerkvorrichtung, wobei die dritten Benachrichtigungsinformationen verwendet werden, um die Endgerätvorrichtungen anzugeben, die von dem ersten Knoten gemanagt werden.

8. Verfahren nach einem der Ansprüche 5 bis 7, wobei das Verfahren ferner umfasst:
Senden dritter Angabeinformationen an den ersten Knoten seitens der Funkzugangsnetzwerkvorrichtung, wobei die dritten Angabeinformationen verwendet werden, um dem ersten Knoten anzugeben, seine Verantwortlichkeit für das Endgerätvorrichtungsmanagement zu stoppen.

9. Kommunikationsgerät, umfassend Module zum Durchführen von Schritten des Verfahrens gemäß einem der Ansprüche 1 bis 4.

10. Kommunikationsgerät, umfassend Module zum Durchführen von Schritten des Verfahrens gemäß einem der Ansprüche 5 bis 8.

11. Kommunikationssystem, umfassend das Kommunikationsgerät gemäß Anspruch 9 und das Kommunikationsgerät gemäß Anspruch 10.

12. Computerprogrammprodukt, umfassend Computerprogrammcode, der bei Ausführung durch einen Prozessor eines Geräts bewirkt, dass das Gerät die Schritte des Verfahrens gemäß einem der Ansprüche 1 bis 8 ausführt.

13. Computerlesbares Speichermedium, umfassend das Computerprogrammprodukt gemäß Anspruch 12.

## Revendications

1. Procédé d'attribution de ressources, comprenant les étapes consistant à :
envoyer (701), par un premier noeud, des deuxièmes informations d'indication à un dispositif de réseau d'accès radio, les deuxièmes informations d'indication étant utilisées pour indiquer que le premier noeud a une capacité de gestion de dispositifs terminaux ;
recevoir, par le premier noeud, des premières informations de notification, les premières informations de notification étant utilisées pour indiquer que le premier noeud est utilisé comme noeud chargé de la gestion de dispositifs terminaux ;
recevoir (704), par le premier noeud, des premières informations de ressource en provenance du dispositif de réseau d'accès radio, les premières informations de ressource étant utilisées pour indiquer une première ressource attribuée au premier noeud, et la première ressource étant attribuée par le dispositif de réseau d'accès radio au premier noeud lorsque le dispositif de réseau d'accès radio détermine, sur la base des deuxièmes informations d'indication, d'utiliser le premier noeud comme noeud chargé de la gestion de dispositifs terminaux ; et
obtenir (705), par le premier noeud, une deuxième ressource à partir de la première ressource, la deuxième ressource étant utilisée pour la communication entre le premier noeud et un premier dispositif terminal, utilisée pour la communication entre un premier dispositif terminal et un deuxième dispositif terminal, ou utilisée pour la communication entre le premier noeud et un deuxième noeud, la deuxième ressource étant une partie ou la totalité de la première ressource, et le premier dispositif terminal et le deuxième dispositif terminal étant tous deux des dispositifs terminaux que le premier noeud est chargé de gérer ;
dans lequel
les premières informations de notification sont également utilisées pour indiquer une zone dans laquelle des dispositifs terminaux que le premier noeud est chargé de gérer sont situés, et les premières informations de notification comprennent au moins un élément parmi : un emplacement central et une longueur de rayon ; un emplacement central, une longueur et une largeur ; une liste de dispositifs terminaux ; ou un identifiant de zone.

2. Procédé selon la revendication 1, le procédé comprenant également l'étape consistant à :
envoyer, par le premier noeud, des deuxièmes informations de notification à un dispositif terminal, les deuxièmes informations de notification étant utilisées pour indiquer que le premier noeud est le noeud chargé de la gestion de dispositifs terminaux.

3. Procédé selon l'une quelconque des revendications 1 et 2, le procédé, avant la réception, par le premier noeud, de premières informations de ressource en provenance du dispositif de réseau d'accès radio, comprenant également l'étape consistant à :
envoyer, par le premier noeud, des troisièmes informations de notification au dispositif de réseau d'accès radio, les troisièmes informations de notification étant utilisées pour indiquer les dispositifs terminaux gérés par le premier noeud.

4. Procédé selon l'une quelconque des revendications 1 à 3, le procédé comprenant également les étapes consistant à :
recevoir, par le premier noeud, des troisièmes informations d'indication en provenance du dispositif de réseau d'accès radio, les troisièmes informations d'indication étant utilisées pour indiquer au premier noeud de cesser d'être chargé de la gestion de dispositifs terminaux ; et
envoyer, par le premier noeud, des quatrièmes informations de notification aux dispositifs terminaux gérés par le premier noeud, les quatrièmes informations de notification étant utilisées pour notifier au dispositif terminal que le premier noeud cesse d'être chargé de la gestion de dispositifs terminaux.

5. Procédé d'attribution de ressources, comprenant les étapes consistant à :
recevoir (701), par un dispositif de réseau d'accès radio, des deuxièmes informations d'indication en provenance d'un premier noeud, les deuxièmes informations d'indication étant utilisées pour indiquer que le premier noeud a une capacité de gestion de dispositifs terminaux ;
envoyer, par le dispositif de réseau d'accès radio, des premières informations de notification, les premières informations de notification étant utilisées pour indiquer que le premier noeud est utilisé comme noeud chargé de la gestion de dispositifs terminaux ;
déterminer (702), par le dispositif de réseau d'accès radio sur la base des deuxièmes informations d'indication, s'il faut utiliser le premier noeud comme noeud chargé de la gestion de dispositifs terminaux ;
lorsqu'il est déterminé qu'il faut utiliser le premier noeud comme noeud chargé de la gestion de dispositifs terminaux, déterminer (703), par le dispositif de réseau d'accès radio, une première ressource attribuée au premier noeud ; et
envoyer (704), par le dispositif de réseau d'accès radio, des premières informations de ressource au premier noeud, les premières informations de ressource étant utilisées pour indiquer la première ressource ;
dans lequel
les premières informations de notification sont également utilisées pour indiquer une zone dans laquelle les dispositifs terminaux que le premier noeud est chargé de gérer sont situés, et les premières informations de notification comprennent au moins un élément parmi : un emplacement central et une longueur de rayon ; un emplacement central, une longueur et une largeur ; une liste de dispositifs terminaux ; ou un identifiant de zone.

6. Procédé selon la revendication 5, le procédé comprenant également l'étape consistant à :
recevoir, par le dispositif de réseau d'accès radio, des informations d'emplacement du premier noeud en provenance du premier noeud ; et
la détermination, par le dispositif de réseau d'accès radio sur la base des deuxièmes informations d'indication, s'il faut utiliser le premier noeud comme noeud chargé de la gestion de dispositifs terminaux consiste à :
déterminer, par le dispositif de réseau d'accès radio sur la base des deuxièmes informations d'indication et des informations d'emplacement du premier noeud, s'il faut utiliser le premier noeud comme noeud chargé de la gestion de dispositifs terminaux.

7. Procédé selon l'une quelconque des revendications 5 et 6, le procédé, avant l'envoi, par le dispositif de réseau d'accès radio, de premières informations de ressource au premier noeud, comprenant également l'étape consistant à :
recevoir, par le dispositif de réseau d'accès radio, des troisièmes informations de notification en provenance du premier noeud, les troisièmes informations de notification étant utilisées pour indiquer les dispositifs terminaux gérés par le premier noeud.

8. Procédé selon l'une quelconque des revendications 5 à 7, le procédé comprenant également l'étape consistant à :
envoyer, par le dispositif de réseau d'accès radio, des troisièmes informations au premier noeud, les troisièmes informations d'indication étant utilisées pour indiquer au premier noeud de cesser d'être chargé de la gestion de dispositifs terminaux.

9. Appareil de communication, comprenant des modules servant à mettre en oeuvre les étapes du procédé selon l'une quelconque des revendications 1 à 4.

10. Appareil de communication, comprenant des modules servant à mettre en oeuvre les étapes du procédé selon l'une quelconque des revendications 5 à 8.

11. Système de communication, comprenant l'appareil de communication selon la revendication 9 et l'appareil de communication selon la revendication 10.

12. Produit-programme d'ordinateur, comprenant un code de programme d'ordinateur qui, lorsqu'il est exécuté par un processeur d'un appareil, amène l'appareil à mettre en oeuvre les étapes du procédé selon l'une quelconque des revendications 1 à 8.

13. Support de stockage lisible par ordinateur comprenant le produit-programme d'ordinateur selon la revendication 12.
